(19) **Europäisches Patentamt / European Patent Office / Office européen des brevets**

(11) **EP 2 964 590 B1**

(12) **FASCICULE DE BREVET EUROPEEN**

(45) Date de publication et mention
de la délivrance du brevet:
**01.02.2017 Bulletin 2017/05**

(21) Numéro de dépôt: **14711707.1**

(22) Date de dépôt: **07.03.2014**

(51) Int Cl.:
***C04B 41/89*** *(2006.01)*

(86) Numéro de dépôt international:
**PCT/EP2014/054507**

(87) Numéro de publication internationale:
**WO 2014/135700 (12.09.2014 Gazette 2014/37)**

(54) **PROCEDE DE PREPARATION D'UN REVETEMENT MULTICOUCHE DE CERAMIQUES CARBURES SUR, ET EVENTUELLEMENT DANS, UNE PIECE EN UN MATERIAU CARBONE, PAR UNE TECHNIQUE D'INFILTRATION REACTIVE A L'ETAT FONDU RMI**

VERFAHREN ZUR HERSTELLUNG EINER MEHRSCHICHTIGEN CARBIDKERAMISCHEN BESCHICHTUNG AUF UND GEGEBENENFALLS IN EINEM TEIL AUS EINEM KOHLENSTOFFMATERIAL MIT EINEM RMI-REAKTIVEN SCHMELZINFILTRATIONSVERFAHREN

METHOD FOR PREPARING A MULTILAYER CARBIDE CERAMIC COATING ON, AND POSSIBLY IN, A PART MADE OF CARBON MATERIAL USING AN RMI REACTIVE MELT INFILTRATION TECHNIQUE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.03.2013 FR 1352112**

(43) Date de publication de la demande:
**13.01.2016 Bulletin 2016/02**

(73) Titulaires:
 • **Commissariat à l'Énergie Atomique et aux Énergies Alternatives 75015 Paris (FR)**
 • **Centre National de la Recherche Scientifique 75016 Paris (FR)**

(72) Inventeurs:
 • **ALLEMAND, Alexandre F-33000 Bordeaux (FR)**
 • **GUILLERMIN, Edouard F-38240 Meylan (FR)**
 • **LE PETITCORPS, Yann F-33850 Leognan (FR)**

(74) Mandataire: **Brevalex 95, rue d'Amsterdam 75378 Paris Cedex 8 (FR)**

(56) Documents cités:
**EP-A2- 0 492 436    WO-A2-2009/081006**

**Description**

**DOMAINE TECHNIQUE**

L'invention a trait à un procédé de préparation d'un revêtement multicouche de céramiques carbures sur, et éventuellement dans, une pièce en un matériau carboné par une technique d'infiltration réactive à l'état fondu (« *Reactive Melt Infiltration* » ou « *RMI* » en anglais).

L'invention a également trait à un revêtement multicouche de céramiques carbures et à une pièce pourvue d'un tel revêtement.

Un tel revêtement peut être qualifié notamment, mais pas seulement, de revêtement de protection contre l'oxydation (« PAO »).

Le domaine technique de l'invention peut être défini de manière générale comme celui de la protection contre l'oxydation ou PAO.

Le domaine technique de l'invention est en particulier celui de la protection contre l'oxydation à haute température, généralement à une température supérieure à 1200°C, des matériaux carbonés c'est-à-dire à base de carbone, et notamment de matériaux composites carbone/carbone.

**ÉTAT DE LA TECHNIQUE ANTÉRIEURE**

Les matériaux composites carbone /carbone ou C/C présentent une excellente conductivité thermique, une faible masse volumique, et peuvent résister à des températures supérieures à 3500°C dans des atmosphères privées d'oxygène.

Cependant, en présence d'oxygène, les matériaux C/C se dégradent très rapidement. Dès 400°C, le carbone est consumé par l'oxygène $O_2$ pour donner du monoxyde ou dioxyde de carbone.

C'est la raison pour laquelle les matériaux à base de carbone et notamment les matériaux composites carbone /carbone doivent être pourvus d'une protection anti-oxydante (PAO) qui permet d'augmenter les performances de ces matériaux dans des conditions d'utilisation extrêmes.

Les revêtements de protection contre l'oxydation des matériaux à base de carbone, et notamment des matériaux composites C/C peuvent être de différentes natures chimiques.

On distingue notamment les revêtements à base de métaux nobles, les revêtements à base de phosphates ; les revêtements à base d'oxyde de bore, de borates ou de borures ; les revêtements à base de carbures.

Nous nous intéresserons plus particulièrement dans la présente aux revêtements à base de carbure.

Les revêtements de protection contre l'oxydation des matériaux à base de carbone, et notamment les revêtements à base de carbures, peuvent être déposés par des techniques de dépôt chimique en phase vapeur (« *Chemical Vapour Déposition* » ou « *CVD* » en anglais) ou d'infiltration chimique en phase vapeur (« *Chemical Vapour Infiltration* » ou « *CVI* » en anglais).

Cependant, la préparation d'un revêtement de protection contre l'oxydation par ces techniques de dépôt en phase vapeur nécessite une durée très longue et est d'un rendement faible, car il faut plusieurs jours pour réaliser un dépôt, par exemple d'une épaisseur de 40 μm.

Ainsi l'infiltration chimique en phase vapeur requiert des jours voire des semaines pour effectuer un dépôt chimique homogène et consistant.

Les techniques de dépôt chimique en phase vapeur ou d'infiltration chimique en phase vapeur ne sont toutefois pas les seules techniques qui permettent de préparer un revêtement de protection contre l'oxydation et notamment un revêtement à base de carbure sur des matériaux carbonés, la préparation de tels revêtements par des techniques par voie liquide peut être également envisagée.

Parmi ces techniques par voie liquide, on connaît ainsi la technique d'infiltration réactive à l'état fondu (« *Reactive Melt Infiltration* » ou « *RMI* » en anglais).

Dans cette technique, un liquide constitué par un métal ou alliage fondu est déposé sur une surface d'un substrat et s'infiltre grâce à un gradient de pression engendré, soit par capillarité, soit par une différence de pression appliquée.

La réactivité chimique entre le liquide et le substrat, tel qu'une préforme, permet de consommer une partie de celui-ci pour donner le produit final.

La profondeur d'infiltration, la porosité finale, le taux de réaction, les phases formées varient selon les différents paramètres de la RMI.

Voici une liste non-exhaustive de ces paramètres :

- les espèces constituant le liquide et le substrat,
- la morphologie du substrat, à savoir la porosité initiale, la taille et l'homogénéité des pores, les dimensions, etc.

- le traitement thermique effectué pour réaliser l'infiltration, à savoir les rampes de montée en température, la température maximale, la durée des paliers, etc.
- les conditions de pression et d'atmosphère lors de la RMI, à savoir sous air, sous une atmosphère de gaz neutre, ou encore sous vide.

Comparée aux autres techniques de synthèse de matériaux composites notamment dans le but de former un dépôt, la RMI est très rapide et possède un rendement élevé.

Ainsi alors que, comme on l'a déjà indiqué plus haut, l'infiltration chimique en phase vapeur requiert des jours voire des semaines pour effectuer un dépôt chimique homogène et consistant, l'infiltration réactive à l'état fondu en revanche, ne demande que quelques minutes ou quelques heures pour réaliser un tel dépôt.

On donne dans ce qui suit un aperçu des divers procédés de RMI qui ont été mis en oeuvre avec des matériaux carbonés et notamment avec des composites C/C.

### - RMI du silicium sur les composites C/C.

Les premières RMI sur des composites C/C ont été effectuées par le Centre allemand pour l'aéronautique et l'aérospatial (Deutsches Zentrum für Luft-und Raumfahrt) en 1975, afin de former du carbure de silicium pour protéger les fibres de carbone contre l'oxydation.

Ces réactions étaient réalisées sous vide à 1420°C avec du silicium sur une préforme nue de fibres de carbone.

Les premières études ont mis en évidence la nécessité de protéger les fibres des préformes par un dépôt de pyrocarbone (PyC) qui, non seulement, est plus stable au contact du silicium, mais surtout prévient la destruction des fibres par consommation de son carbone [EVAN 1974, HILL 1975, KREN 2005].

La RMI étant un procédé simple, de nombreuses études paramétriques en vue d'exécuter des modèles numériques ont été réalisées pour optimiser les rendements des procédés de synthèse des matériaux composites.

Industriellement, désormais la siliciuration se fait par voie liquide à 1600°C avec une différence de pression d'une atmosphère entre la face inférieure et la face supérieure de la pièce.

L'augmentation de la température permet de diminuer la viscosité du fluide et dans un même temps accentue la cinétique de formation du SiC [EINS 1998, NELS 1999, KREN 2005].

[FAVRE et *al*.] ont également étudié les microstructures et le mécanisme de formation du SiC. Une caractéristique importante de leurs travaux apparaît dans de nombreuses études sur la RMI : la présence de cristaux de carbure isolés dans la phase semi-métallique. FAVRE l'explique par la rupture de la couche de SiC et la diffusion des particules de SiC isolées dans la matrice Si. En conséquence, les auteurs ont déterminé que la croissance des particules de SiC était régie par un mécanisme de cristallisation et la fragmentation [FAVR 2003].

La siliciuration ayant été l'objet de nombreuses études paramétriques, il est possible de déterminer une porosité ouverte optimale afin d'infiltrer toute la préforme et combler la majorité des pores. Elle est fonction de la taille des pores, de l'homogénéité de ces derniers, de la viscosité de la phase liquide ainsi que de la vitesse d'imprégnation [EINS 1998, NELS 1999].

Ce procédé étant rapide, à fort rendement et peu coûteux en énergie, de nombreuses études ont été effectuées concernant différents types de matériaux autant pour les substrats que pour les espèces infiltrantes. On peut noter entre autres des travaux sur des systèmes $C/ZrB_2$ en faisant réagir des fibres revêtues de bore avec un composé stoechiométrique $ZrCu_2$ [ZHAN 2011].

### - Développement de carbures ultra-réfractaires par RMI dans les composites C/C.

L'intérêt pour le développement de céramiques à ultra-hautes températures *(« UHTC » ou « Ultra High Temperature Ceramics »,* en anglais) par RMI dans les composites C/C s'est accru récemment.

Les recherches semblent s'être particulièrement portées sur le développement de carbures de zirconium au sein de préformes carbonées. Le zirconium étant un élément de la colonne IV B du Tableau de Mendeleïev, il possède un comportement similaire non seulement au titane et à l'hafnium, mais aussi au tantale.

a) RMI avec Zr [ZOU 2010].

Le zirconium (Zr) est intéressant pour sa température de fusion de 1852°C. Cette température étant inférieure à 2000°C, la conception du four pour le fondre est moins difficile et moins coûteuse que pour les éléments tels que l'hafnium, le tantale et surtout le tungstène.

ZOU et *al.* [ZOU 2010] ont montré en 2010 qu'une infiltration réactive en phase liquide de zirconium, dans des préformes 2D de fibres de carbone revêtues d'un dépôt de Pyrocarbone PyC, suit le même comportement que le silicium et est régie par les mêmes lois. En effet, le Zr s'infiltre au sein de la préforme par les forces capillaires et réagit avec le carbone déposé sur les fibres sans attaquer les fibres.

L'échantillon $C_f$/ZrC a ensuite été caractérisé au microscope électronique à balayage, au microscope électronique à transmission et en DRX. L'analyse DRX met en évidence la présence du carbone, de ZrC mais aussi de $\alpha$-Zr résiduel. Les fibres de carbone sont bien revêtues d'une couche de ZrC, et les espaces interfibres comprennent 2 phases : une phase métallique d'$\alpha$-Zr et des particules de ZrC. Une observation approfondie au MEB des couches et particules de ZrC a mis en évidence la présence de micro voire nano inclusions dans les carbures. Le MET a permis de vérifier qu'il s'agissait d'inclusions d'$\alpha$-Zr.

Les auteurs considèrent que les mécanismes de RMI pour les systèmes Si-C et Zr-C sont similaires dans la théorie. Dans les deux systèmes, après la formation d'une couche continue de carbure, la poursuite de la formation de carbure dépend de la diffusion du carbone vers le métal fondu à travers la couche de carbure. La solubilité limitée du carbone dans le métal crée alors une région biphasée, où carbures et métal coexistent. Lorsque la température diminue, les carbures précipitent dans la phase métallique jusqu'à la température eutectique. A ce point, la phase métallique se solidifie, et le refroidissement implique la transformation du $\beta$-Zr en $\alpha$-Zr. Les carbures ZrC qui ont germé, croissent au cours du refroidissement et la coalescence de ces derniers piège des phases de $\beta$-Zr qui en refroidissant donnent les inclusions de $\alpha$-Zr.

Néanmoins si l'infiltration est réalisée avec du zirconium non allié et que l'infiltrant est en faible quantité, une contraction a lieu lors du refroidissement et de nombreux carbures dispersés et détachés des fibres de carbone sont observés. Il y a donc une décohésion de la couche de carbure avec le carbone. De nombreuses phases métalliques d'$\alpha$-Zr n'ayant pas réagi sont toujours présentes dans la préforme, toutefois elles ne comblent pas toutes les porosités [ZOU 2010].

b) RMI avec Si-Zr.

Afin de remédier aux inconvénients de la RMI avec le zirconium, des études ont été menées sur l'utilisation d'alliages binaires Si-Zr. Il est intéressant de préciser que le silicium est un élément fondant : il abaisse la température de fusion de nombreux éléments s'il est allié avec ces derniers.

Ainsi, WANG et *al.* [WANG 2012] ont étudié en 2012 l'infiltration réactive en phase liquide d'un alliage binaire 87Si13Zr (% at.) dans une préforme 3D de fibres de carbone aiguilletées.

Un dépôt de pyrocarbone sur les fibres a permis de densifier la préforme jusqu'une densité de 1,4 g.cm$^{-3}$ avec une porosité ouverte de 25%, la taille des pores étant principalement comprise entre 20 et 80 $\mu$m. L'alliage 87Si13Zr est utilisé sous forme de poudre. La RMI a eu lieu à 1800°C sous une pression de 3 kPa. L'échantillon a été caractérisé au MEB et à la DRX.

L'utilisation d'un alliage de silicium contenant du zirconium pour réaliser l'infiltration réactive permet de créer une couche de carbure cohérente avec le carbone.

Il est intéressant de préciser qu'un gradient de microstructure est observé et que la concentration de carbure SiC-ZrC varie selon l'éloignement de la fibre.

L'architecture observée est donc la suivante : la fibre couverte par le carbone déposé par CVD, puis un gradient de SiC-ZrC, où la concentration de ZrC augmente selon l'éloignement par rapport à la fibre, et enfin une phase métallique de ZrSi$_2$ n'ayant pas réagi.

La présence de SiC uniquement à l'interface s'explique par la faible concentration en zirconium de l'alliage initial, le silicium ayant fondu avant le zirconium.

Au fur et à mesure que le SiC se forme, la concentration en Zr dans l'alliage augmente et une phase de ZrSi$_2$ plus importante qu'au début du procédé est formée.

Comme l'alliage s'enrichit en Zr, il se forme de plus en plus de ZrC, ce qui explique le gradient SiC-ZrC de la matrice.

Ce gradient a aussi été observé avec l'alliage de composition 80Si20Zr (%at). [WANG 2012].

c) RMI avec Hf.

VOIGT et *al.* [VOIG 2011] ont réalisé une étude en 2010 pour déterminer la réactivité avec le carbone de 4 alliages d'hafnium, en vue de réaliser des carbures d'hafnium par RMI avec des alliages à bas point de fusion plutôt que par compression isostatique à chaud, comme c'est le cas actuellement dans l'industrie.

Les systèmes étudiés sont ceux présentés dans le tableau ci-dessous.

**Tableau 1 - Alliages étudiés dans la publication de Voigt et *al.* [VOIG 2011]**

| Alliage | SiHf | HfV | TiHf | HfMo |
|---|---|---|---|---|
| Pourcentage atomique Hf | 8 | 43 | 20 | 34 |

(suite)

| Alliage | SiHf | HfV | TiHf | HfMo |
|---|---|---|---|---|
| Température de fusion (°C) | 1338 | 1456 | 1650 | 1866 |

Les poudres d'alliages sont dans un premier temps comprimées à froid sous 150 MPa avec une poudre de carbone, respectivement dans un rapport stoechiométrique de 2 atomes de métaux pour 3 atomes de carbone afin de permettre une formation importante de carbure.

Une résine phénolique est utilisée comme liant dans une proportion de 30% en volume. Les échantillons sont ensuite pyrolysés à 1000°C sous une atmosphère d'argon pendant 30 minutes.

Enfin les échantillons sont recuits sous atmosphère d'argon dans un four en graphite à une température d'un sixième ou d'un quart supérieure au point de fusion de l'alliage contenu dans l'échantillon.

Le temps de recuit varie entre une heure et 5 heures. Les échantillons sont alors caractérisés par observation au microscope électronique à balayage et diffraction rayons X.

Le tableau ci-après résume les enthalpies de formation des carbures étudiés.

**Tableau 2 - Enthalpies de formation de quelques carbures [VOIG 2011; KREN 2005]**

| Carbure | HfC | TiC | VC | SiC | ZrC | $Mo_2C$ |
|---|---|---|---|---|---|---|
| Enthalpie de formation à 25°C (kJ.mol$^{-1}$) | 209,6 | 184,3 | 100,8 | 68 | 49,5 | 46 |

Pour l'alliage SiHf8at%, les résultats de la DRX ne montrent aucune influence du temps et de la température de recuit sur les phases présentes dans l'échantillon final. Aucune phase métallique initiale (Si et $HfSi_2$) n'est détectable sur l'échantillon ayant été traité à la plus basse température pendant une heure. Les carbures d'hafnium semblent germer à l'interface avec le carbone, ce qui s'accorde avec les enthalpies de formation des carbures selon les auteurs : Hf doit réagir dans un premier temps pour former HfC. Ensuite, les processus de diffusion du carbone à travers le carbure d'hafnium à l'interface conduisent à une réaction complète de l'alliage en HfC et SiC même au coeur de l'échantillon.

Le système Hf-V semble être dépendant du temps et de la température de recuit mais aussi du carbone utilisé : des phases intermétalliques initiales ($HfV_2$) sont toujours trouvées après un recuit à 1700°C de 2,5 heures. Le système semble être plus réactif avec le carbone amorphe et une dépendance de la stoechiométrie des carbures de vanadium selon le temps de recuit est observable. Il est possible que cette forte dépendance en temps soit due à la formation d'une couche de carbure passive autour des particules de composés intermétalliques. HfC est toujours situé à l'interface avec la matrice carbonée, les carbures de vanadium sont eux en contact avec HfC seulement.

Le système Hf-Ti ne montre pas de dépendance selon le temps et la température de recuit. Les enthalpies de formation des carbures HfC et TiC laissaient présager une formation simultanée, mais il s'avère que seule une couche de TiC se forme, elle est constamment au contact du carbone. Une raison possible est la différence de mouillage entre les phases riches en Ti et celles en Hf avec le carbone. L'hafnium ne réagissant pas, il semble qu'aucune diffusion du carbone à travers TiC n'a lieu pour former HfC.

Enfin, le système Hf-Mo ne réagit pas comme attendu : la différence d'enthalpie de formation des deux carbures laissait présager une réaction complète de l'hafnium pour former HfC, mais quel que soit le temps de recuit une phase métallique résiduelle d'Hf, est relevée par DRX.

d) RMI avec Hf-Si-Zr

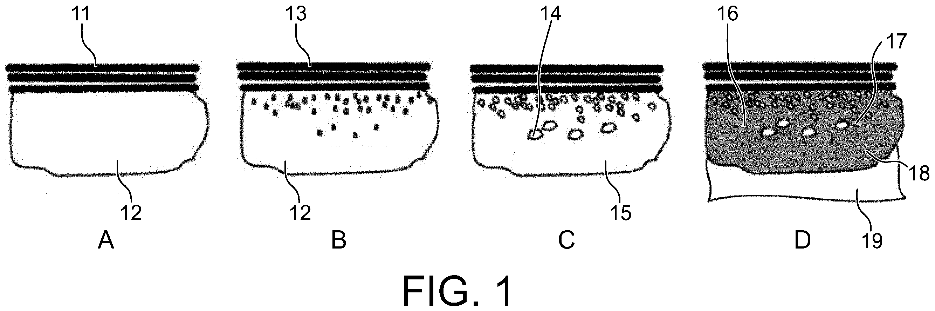

YE et *al.* [YE 2012] se sont intéressés aux mécanismes de formation des microstructures de composites $C_f$/(Hf,Zr,Si)C lors d'une infiltration réactive en phase liquide à 1900°C (voir Figure 1A, B, C, D).

La préforme C-C (11) utilisée est composée de fibres de carbone T300 sur lesquelles une couche de pyrocarbone a été déposée afin d'éviter d'endommager la préforme lors de la RMI. La préforme a une densité initiale p de 1,29 g.cm$^{-3}$.

L'alliage utilisé est un ternaire de composition 50Hf-40Si-10Zr (% at.) dont la température de fusion est 2440°C, il est mis en lingot dans un four à arc. La réaction de RMI est effectuée dans un creuset en graphite pendant 30 minutes à 1900°C. L'échantillon est ensuite observé et analysé au microscope électronique à balayage, en EDXS et en DRX.

A 1900°C, l'alliage en contact avec la préforme fond (alliage liquide 12) grâce à l'exothermicité des réactions de carburations d'Hf ayant lieu à la surface, l'infiltration a alors lieu, et la formation de carbure à l'intérieur de la préforme est initiée. La microstructure autour des fibres décrite par les auteurs se forme en trois temps. Dans un premier temps, une germination importante de carbure HfC (13) a lieu au contact du PyC. Cela forme une couche non continue de HfC autour des fibres, car la quantité de pyrocarbone est beaucoup plus grande que celle d'Hf. Certains carbures HfC

croissant (particules de HfC 14) tandis qu'un liquide riche en Si (15) est produit. Finalement une phase continue de SiC se forme, et devient alors la matrice (16) des particules de HfC (première couche 17 et seconde couche 18). Enfin une dernière couche (19) se forme composée de carbures mixtes et de phases métalliques [YE 2012] (voir Figures 1A, B, C, D).

La carburation de l'hafnium étant très rapide, la couche de carbure HfC en surface bloque rapidement les canaux d'infiltration, et limite ainsi la profondeur d'infiltration de l'alliage.

e) Industrialisation de la RMI pour la synthèse de carbures autres que SiC dans les matériaux C/C.

Le document de WILLIAMS et *al.* [WILL 2007] décrit un procédé de synthèse de carbures de métaux réfractaires au sein de matériaux composites C/C par RMI.

Les métaux d'infiltration sont choisis parmi les métaux dont le point de fusion est au-dessus de 1850°C tels que par exemple le vanadium, le chrome, le zirconium, le niobium, le molybdène, le hafnium, le tantale, le tungstène, l'iridium. Les métaux d'infiltration préférés sont les métaux du groupe IV tels que le zirconium et le hafnium.

Le procédé consiste à utiliser une préforme de fibres de carbone, où aucun dépôt de carbone supplémentaire n'a été effectué. Un dépôt d'une couche de zircone de 0,1 $\mu$m est réalisé par CVI, afin de recouvrir chaque fibre et ainsi les protéger. Une fois les fibres revêtues de cette couche de zircone, une couche de carbone sacrificiel: du pyrocarbone, est déposée par CVI pour servir de réactif dans la prochaine étape. Une RMI est alors effectuée à 1950°C pendant 10 minutes avec du zirconium sous une atmosphère d'argon et d'hydrogène. Le volume de zirconium présenté correspond à 115 % du volume de porosité de la préforme. Le carbone sacrificiel a entièrement réagi et la porosité n'est plus que de 5%. Les espaces ayant été comblés sont constitués de carbures de zirconium, riches en zirconium. Enfin, une seconde RMI est effectuée avec du silicium pendant 10 minutes à 1500°C, toujours sous une atmosphère d'argon et d'hydrogène.

Il est précisé que la première RMI peut laisser des phases métalliques résiduelles de type Zr, mais qu'elles ne sont pas critiques pour une utilisation du matériau à des températures supérieures à 2000°C car le Zr peut agir comme une phase imperméabilisant le carbone [WILL 2007].

Cependant, deux points importants sont à retenir :

D'une part, les différentes études portant sur l'infiltration de carbures réfractaires par voie liquide dans les matériaux C/C indiquent toutes la présence de phases métalliques résiduelles dans les pores ou espaces interfils.

Seule la RMI du silicium a été suffisamment étudiée pour comprendre les paramètres critiques conduisant à l'absence de réaction de certaines phases métalliques et pour limiter la quantité de ces phases.

D'autre part, les publications portant sur l'utilisation d'alliages binaires et ternaires pour la synthèse de carbures ultra-réfractaires par voie liquide mentionnent toutes la formation de microstructures à gradient de carbure c'est-à-dire que, par exemple dans le cas d'un alliage binaire de deux métaux $M_1$ et $M_2$, le rapport $M_1C/M_2C$ varie selon l'éloignement par rapport aux fibres. Ces microstructures à gradient s'expliquent par la thermodynamique et la supersaturation de certains éléments dans les phases métalliques.

Il est bien entendu que les gradients qui sont observés ne sont pas constitués par des couches séparées, bien définies, chacune de ces couches séparées étant constituée par un seul type de carbure.

L'inconvénient essentiel des microstructures à gradient est qu'elles sont constituées de mélanges de plusieurs types de carbures ce qui occasionne une médiocre résistance à l'oxydation.

Il existe donc au vu de ce qui précède, un besoin pour un procédé de préparation d'un revêtement multicouche de carbures de métaux sur, et éventuellement dans, un matériau carboné qui permette de préparer par RMI en une seule étape, un tel revêtement multicouche dont chaque couche, constituée par un seul et même carbure est continue, dense et non fissurée.

En outre, ce revêtement ne doit pas présenter de microstructures à gradient et ne doit pas comporter de phases métalliques résiduelles, notamment de phases métalliques résiduelles avec des températures de fusion inférieures à 2000°C.

Il existe encore un besoin pour un tel procédé qui permette de préparer un tel revêtement multicouche sur toutes sortes de matériaux carbonés sans aucune limitation sur la nature de celui-ci qu'il s'agisse par exemple de fibres de carbone, de fils de carbone, d'un composite C/C ou de tout matériau recouvert de carbone.

## EXPOSÉ DE L'INVENTION

Ce but, et d'autres encore, sont atteints, conformément à l'invention par un procédé de préparation d'un revêtement multicouche de carbures de métaux sur au moins une surface d'une première couche en carbone d'un substrat, et éventuellement sous ladite surface à l'intérieur de ladite première couche en carbone, par une technique d'infiltration réactive à l'état fondu, dans lequel on réalise les étapes a) à d) successives suivantes :

a) on met en contact la surface avec un disiliciure de métal $MSi_2$ solide dans lequel M est choisi parmi l'Hafnium, le Titane, et le Tantale ;

b) on chauffe le substrat, et le disiliciure de métal jusqu'à une température $T_P$ supérieure à la température de fusion du disiliciure de métal ;

c) on observe un palier à la température $T_P$ pendant une durée suffisante pour que le disiliciure de métal réagisse avec le carbone et forme un premier revêtement multicouche comprenant une couche dense et continue constituée par du SiC, intégralement recouverte par une couche dense et continue constituée de MC;

d) on refroidit la pièce pourvue du premier revêtement multicouche ; puis à l'issue de l'étape d), on réalise en outre éventuellement l'étape e) suivante :

e) on dépose à la surface du premier revêtement multicouche une deuxième couche de carbone ;

à l'issue de l'étape d) ou de l'étape e), on réalise en outre les étapes f) à i) successives suivantes :

f) on met en contact la surface du premier revêtement multicouche contenant encore du carbone, ou la surface de la deuxième couche de carbone, avec un disiliciure de métal $MSi_2$ solide dans lequel M est choisi parmi l'Hafnium, le Titane, et le Tantale ;

g) on chauffe la surface du premier revêtement multicouche contenant encore du carbone et le disiliciure de métal, ou la deuxième couche de carbone et le disiliciure de métal, jusqu'à une température $T_P$ supérieure à la température de fusion du disiliciure de métal ;

h) on observe un palier à la température $T_P$ pendant une durée suffisante pour que le disiliciure de métal réagisse avec le carbone et forme un deuxième revêtement multicouche comprenant une couche dense et continue constituée par du SiC, intégralement recouverte par une couche dense et continue constituée de MC ;

i) on refroidit la pièce pourvue du deuxième revêtement multicouche ; puis, à l'issue de l'étape i), on réalise en outre éventuellement l'étape j) suivante :

j) on dépose à la surface du deuxième revêtement multicouche une troisième couche de carbone ;

et à l'issue de l'étape i) ou de l'étape j), on réalise en outre éventuellement l'étape k) suivante :

k) on effectue une siliciuration de la surface du deuxième revêtement multicouche contenant encore du carbone ou de la troisième couche de carbone, par du Si liquide, moyennant quoi on obtient une couche de SiC sur le deuxième revêtement multicouche.

L'étape j) n'est pas réalisée seule, si elle est réalisée elle est suivie de l'étape k).

Autrement dit, le procédé selon l'invention peut comprendre les étapes f) à i), ou les étapes f) à i) puis les étapes j) et k), ou les étapes f) à i) puis l'étape k).

On peut considérer que le revêtement multicouche préparé par le procédé selon l'invention comprend donc un premier revêtement multicouche et au moins un deuxième revêtement multicouche, et éventuellement une couche supérieure de SiC.

Généralement, la première couche en carbone présente une porosité ouverte, par exemple une porosité ouverte moyenne de 1 à 99% en volume afin d'offrir un chemin d'accès au disiliciure de métal.

Généralement, la deuxième couche en carbone et la troisième couche en carbone éventuelles présentent de même une porosité ouverte, par exemple une porosité ouverte moyenne de 1 à 99% en volume.

On peut dire que le procédé selon l'invention propose une voie différente pour obtenir des dépôts alternés de carbures.

Ce procédé consiste à utiliser des alliages binaires spécifiques à bas point de fusion en mesure de s'infiltrer à l'état liquide dans le carbone et de réagir avec celui-ci pour former des carbures réfractaires. Le procédé selon l'invention met en oeuvre une technique infiltration réactive à l'état fondu ou RMI.

Le procédé selon l'invention comprend des suites spécifiques d'étapes a) à d) et f) à i) spécifiques qui n'a jamais été décrite dans l'art antérieur, tel qu'exposé notamment dans les documents étudiés plus haut.

L'étape k) éventuelle finale n'a également pas été décrite dans l'art antérieur.

Le procédé selon l'invention se distingue notamment des procédés de l'art antérieur en ce qu'il met en oeuvre en tant qu'alliage d'imprégnation réactive un alliage spécifique qui est un disiliciure de métal $MSi_2$, choisi parmi trois disiliciures de métal particuliers, à savoir le disiliciure d'hafnium $HfSi_2$, le disiliciure de Titane $TiSi_2$, et le disiliciure de Tantale $TaSi_2$.

Parmi ces trois disiliciures de métal, le disiliciure d'hafnium $HfSi_2$ est préféré.

En effet, il a été déterminé expérimentalement, comme cela et exposé plus loin, que le disiliciure d'hafnium $HfSi_2$ était, parmi de nombreux autres composés, le composé intermétallique convenant le mieux pour réaliser une infiltration réactive à l'état fondu, « RMI », notamment à partir de mélanges de poudres métalliques compactées, en particulier à une température inférieure à 1800°C.

L'utilisation du disiliciure d'hafnium permet non seulement d'obtenir une équi-répartition, de l'hafnium, sur toute la largeur de l'infiltration, mais aussi d'avoir un composé avec une température de fusion unique (car c'est un composé défini), ce qui évite une infiltration prématurée du silicium dans la pièce.

En outre comme cela est également exposé plus loin, le $HfSi_2$ fondu est très fluide et il imprègne même les très faibles porosités. De ce fait, le procédé selon l'invention peut être mis en oeuvre avec succès aussi bien avec des matériaux carbonés poreux qu'avec des matériaux carbonés denses, voire très denses.

Les propriétés avantageuses du $HfSi_2$ dans le cadre du procédé selon l'invention, qui sont exposés plus loin, à savoir notamment, la réalisation en une seule étape d'un premier dépôt multicouche SiC/HfC dense et non fissuré puis d'un deuxième dépôt multicouche SiC/HfC dense et non fissuré, sont aussi présentées par le disiliciure de Titane $TiSi_2$, et le disiliciure de Lanthane $TaSi_2$.

En effet, les enthalpies de formation de TaC (-178 kJ/mol à 25°C) de TiC (-184 kJ/mol à 25°C) et de HfC (-210 kJ/mol à 25°C) sont la preuve que les systèmes Ta-Si et Ti-Si se comportent de la même manière que Hf-Si.

Il est donc aussi possible d'obtenir des dépôts multi-séquencés C/SiC/TaC ou C/SiC/TiC.

Le procédé selon l'invention ne présente pas les défauts, inconvénients, limitations et désavantages des procédés de l'art antérieur et résout les problèmes des procédés de l'art antérieur, essentiellement du fait de la mise en oeuvre dans le procédé selon l'invention d'un disiliciure de métal $MSi_2$, particulier, de préférence le disiliciure d'hafnium.

Ainsi, par rapport aux procédés de dépôt en phase gazeuse tels que le dépôt chimique en phase vapeur « CVD » ou l'infiltration chimique en phase vapeur « CVI », le procédé selon l'invention possède tous les avantages inhérents au procédé de RMI : il est notamment rapide et possède un rendement élevé.

Le procédé selon l'invention permet, de manière étonnante de préparer par un dépôt en phase liquide par la technique de « RMI », un revêtement non fissuré composé d'au moins deux carbures, à savoir SiC et MC, de préférence HfC.

Le premier revêtement est réalisé en une seule étape de « RMI » grâce à la fusion, à l'infiltration et à la réaction avec le C d'un disiliciure de métal tel que le disiliciure d'hafnium. Il en est de même du deuxième revêtement.

En effet, selon l'invention, à partir d'un seul composé intermétallique et en une seule opération continue sans interruption on prépare un premier revêtement comportant deux couches de carbures puis on prépare de même à partir d'un seul composé intermétallique et également en une seule opération continue sans interruption un deuxième revêtement comportant deux couches de carbures.

Le premier revêtement obtenu est constitué, quelle que soit la nature de la surface en carbone d'une couche, dense, continue et non fissurée de SiC qui est intégralement recouverte par une couche dense, continue et non fissurée de MC, tel que HfC et cela sans fissuration. Il en est de même du deuxième revêtement.

Par couche dense, on entend généralement, au sens de l'invention, que cette couche est constituée par un matériau dont la densité est supérieure à 95% de la densité théorique, voire égale à 100% de la densité théorique.

De manière importante, il y a lieu de noter que le revêtement préparé par le procédé selon l'invention est totalement dépourvu de toute phase métallique résiduelle, notamment avec une température de fusion inférieure à 2000°C.

C'est un des inconvénients essentiels des procédés de l'art antérieur, et notamment des procédés de « RMI » de l'art antérieur, tel qu'il a été exposé dans l'étude qui précède, qui est ainsi surmonté par le procédé selon l'invention.

Il est à noter que les couches de SiC et de MC, tel que HfC, sont bien distinctes, bien délimitées. Chacune de ces couches est constituée d'un seul carbure. La couche de SiC est ainsi constituée de SiC et seulement de SiC, et ne contient pas de HfC, tandis que la couche de MC, tel que HfC, est constituée de MC et seulement de MC et ne contient pas de SiC.

Il n'existe pas de gradient de concentration en carbure dans le revêtement préparé par le procédé selon l'invention et ce aussi bien dans le premier revêtement multicouche que dans le deuxième revêtement multicouche.

Là-encore, c'est un des inconvénients majeurs des procédés de « RMI » de l'art antérieur, et notamment des procédés de « RMI » mettant en oeuvre des alliages binaires, à savoir la présence dans les revêtements préparés par ces procédés de l'art antérieur, de microstructures à gradient de carbure, qui est surmonté par le procédé selon l'invention.

Finalement, le procédé de l'invention permet de réaliser un dépôt en céramiques multi séquencé original qui, non seulement se situe en surface du matériau carboné mais aussi, et c'est là une des caractéristiques fondamentales du revêtement obtenu par le procédé selon l'invention en profondeur, au coeur du matériau à protéger. Cela mène « *in fine* » à un matériau C/C ou C à gradient croissant en céramiques du coeur vers la surface.

La première couche en carbone peut être une couche en carbone déposée sur un substrat qui est en un matériau différent du carbone.

Par matériau différent du carbone, on entend tous les matériaux qui sont différents du carbone, quelle que soit leur nature chimique.

En d'autres termes, le procédé selon l'invention peut s'appliquer à tous les substrats quelle que soit la nature chimique du matériau, différent du carbone qui les constitue, à partir du moment où au moins une surface de ce substrat est préalablement revêtue, recouverte, d'une couche de carbone dite première couche de carbone.

Cette première couche de carbone peut être déposée par tout procédé adéquat, par exemple par un procédé de CVI, notamment dans le cas d'une couche de pyrocarbone, ou par imprégnation par du brai puis pyrolyse de ce brai.

Le matériau différent du carbone peut être notamment choisi parmi les céramiques carbures telles que le SiC ; les matériaux composites des céramiques carbures tels que les composites SiC/SiC ; les céramiques nitrures; les céramiques borures; les céramiques oxydes; les métaux; et leurs mélanges.

Par exemple, on peut déposer une couche de pyrocarbone par CVI dans les porosités de composites SiC/SiC, puis ensuite préparer un revêtement multicouche sur cette couche de pyrocarbone par le procédé selon l'invention.

Ou bien la première couche en carbone est une couche d'un substrat entièrement en carbone.

Avantageusement, le carbone qui constitue un tel substrat entièrement en carbone est du graphite.

Le carbone qui constitue le substrat entièrement en carbone peut être sous la forme de fibres de carbone, de fils de carbone ou bien sous la forme d'un matériau composite carbone/carbone.

Ce matériau composite peut être un matériau composite 2D ou 3D.

Le substrat peut avoir une forme et une taille quelconque, à la condition toutefois qu'il puisse être disposé dans une enceinte permettant de mettre en oeuvre la technique d'infiltration réactive à l'état fondu.

Le substrat peut notamment se présenter sous la forme d'un substrat plan présentant une première surface principale et une seconde surface principale sensiblement parallèles. Un tel substrat peut être appelé pastille.

Ce substrat est généralement un substrat vertical, la première surface principale étant une surface supérieure et la seconde surface principale étant une surface inférieure.

La surface du substrat sur laquelle est préparé le revêtement multicouche par le procédé selon l'invention est de préférence la surface supérieure.

Avantageusement, le substrat en carbone présente une porosité ouverte moyenne de 1% à 99% en volume. Cette porosité est déterminée par mesure de la Poussée d'Archimède.

La mise en contact de la surface avec le disiliciure de métal $MSi_2$ solide peut être réalisée de plusieurs façons.

Ainsi, la mise en contact de la surface avec le disiliciure de métal $MSi_2$ solide peut être réalisée en déposant le disiliciure de métal $MSi_2$ sur la surface, ou bien en déposant un substrat en carbone et du $MSi_2$ dans un creuset.

Par exemple, le disiliciure de métal $MSi_2$ peut être déposé sur la surface sous la forme d'une poudre, compactée ou non, ou sous la forme d'une barbotine constituée d'une poudre du disiliciure de métal $MSi_2$ et d'un liquide.

Ce liquide peut être notamment un liquide organique tel qu'un alcool comme l'éthanol.

La concentration de la poudre du siliciure dans la barbotine est généralement de 5% à 60% en masse.

Avantageusement, lors de l'étape b) on effectue une montée en température rapide. Par montée en température rapide, on entend généralement une montée effectuée à raison de 1000°C/minute à 3000°C/minute, par exemple à raison de 2800°C/minute, jusqu'à la température $T_P$.

Avantageusement, la température $T_P$ est de 900 °C à 2500°C, par exemple de 1800°C.

Avantageusement, on observe le palier à la température $T_P$ pendant une durée de 5 minutes à 15 minutes.

Il a été ainsi notamment constaté que les dépôts réalisés dans les composites C/C ne présentent aucune phase métallique résiduelle pour des paramètres d'infiltration réactive de 15 minutes à 1800°C.

Avantageusement, les étapes b) à d) du procédé selon l'invention, sont réalisées sous une atmosphère de gaz neutre, par exemple une atmosphère d'argon, dynamique.

Lorsque le substrat est un substrat entièrement en carbone qui présente une porosité ouverte moyenne telle que définie plus haut, c'est-à-dire de 1 à 99 % en volume, on peut avantageusement mettre en contact la surface avec un volume du disiliciure de métal $MSi_2$ solide inférieur à 30% du volume de la porosité ouverte moyenne du substrat en carbone, de préférence compris entre 20% et 30% du volume de la porosité ouverte moyenne du substrat en carbone.

On a vu que lors de l'étape e) éventuelle, on dépose à la surface du premier revêtement multicouche une deuxième couche de carbone.

Cette deuxième couche de carbone peut être déposée par tout procédé adéquat, par exemple par un procédé de CVI, notamment dans le cas d'une couche de pyrocarbone, ou par imprégnation par du brai puis pyrolyse de ce brai.

Cette deuxième couche de carbone a généralement une épaisseur de 0,1 à 500 $\mu$m.

Cette étape e) permet éventuellement de déposer une couche supplémentaire de réactif (de carbone), s'il n'y a plus ou plus suffisamment de carbone à la surface du premier revêtement multicouche, en vue d'autres dépôts ultérieurs tels que ceux décrits dans les étapes f) à i).

Les étapes f) à i) sont généralement réalisées *mutadis mutandis* de la même manière et dans les mêmes conditions que les étapes a) à d).

Lors de l'étape j) éventuelle, on dépose à la surface du deuxième revêtement multicouche une troisième couche de carbone. Cette troisième couche de carbone peut être déposée par un procédé tel que celui utilisé pour le dépôt de la deuxième couche de carbone, elle a généralement la même épaisseur que la deuxième couche de carbone et elle joue un rôle analogue à la deuxième couche en vue du dépôt d'une couche de SiC lors de l'étape k).

Lors de l'étape k) éventuelle, la seconde infiltration réactive avec du silicium permet non seulement de déposer une nouvelle couche de carbure SiC, mais aussi d'homogénéiser le dépôt de carbure MC tel que HfC sur le substrat.

Les étapes f) à i) permettent d'améliorer encore les propriétés des matériaux obtenus à l'issue de l'étape d), et ces propriétés sont même encore améliorées par l'étape k).

En d'autres termes, à l'issue de l'étape d) ou e), on réalise par RMI une seconde infiltration de disiliciure de métal tel que le $HfSi_2$ par les étapes f) à i) comme dans les étapes a) à d), puis on peut éventuellement réaliser une simple siliciuration par du Si liquide (étape k éventuellement précédée de l'étape j)) afin d'obtenir simplement une couche de SiC.

L'étape e) éventuelle, puis les étapes f) à i) peuvent être répétées, par exemple de 1 à 100 fois, puis on réalise l'étape j) éventuelle et l'étape k) éventuelle.

L'étape k) éventuelle (avec l'étape j) éventuelle) n'est pas répétée, elle constitue, lorsqu'elle est présente, l'étape finale du procédé pour former une couche finale de SiC « au sommet » du revêtement multicouche comprenant le premier revêtement multicouche et au moins un deuxième revêtement multicouche.

Il est ainsi possible d'obtenir un grand nombre de couches SiC et/ou SiC/HfC.

La présente invention permet ainsi d'élaborer, par RMI successives et dépôts de C alternés, des matériaux carbonés par exemple des matériaux composites C/C à gradient de carbone par rapport aux céramiques SiC/MC. Ceci peut être intéressant pour apporter des fonctions à coeur ou bien en périphérie des matériaux carbonés tels que les matériaux composites C/C.

Différentes expériences, qui sont exposées plus loin, ont été effectuées et démontrent que le procédé selon l'invention a été effectivement mis en oeuvre en utilisant un banc de mouillage haute température équipé d'un four inductif de forte puissance.

Il a ainsi été montré que les infiltrations réactives réalisées conformément au procédé selon l'invention conduisent à la formation d'une microstructure en multicouche : au contact du carbone se situe une couche d'une épaisseur environ 50 nm à 1 $\mu$m de SiC et de SiC seulement, puis une couche de HfC seul dont la taille des grains est généralement comprise entre 0,5 et 5 $\mu$m.

Il est à noter que ces couches sont bien distinctes, il ne s'agit pas de couches à gradients de concentration. Au-dessus de ces carbures d'hafnium, se trouvent soit des pores soit de nouveaux carbures SiC, d'une taille de grain comprise entre 1 et 15 $\mu$m.

Il est également à noter que, lorsque le substrat est constitué par des fibres de carbone, celle-ci sont intactes et gardent leur intégrité, le carbone consommé pour la carburation de l'hafnium et du silicium étant celui déposé sur les fibres lors de la caléfaction qu'elles ont préalablement subie.

Des revêtements analogues et présentant des propriétés voisines peuvent être préparés, comme on l'a vu plus haut, en utilisant du $TaSi_2$ ou du $TiSi_2$ au lieu du $HfSi_2$. Ces siliciures conduisant à la formation de couches de TaC ou de TiC.

**BRÈVE DESCRIPTION DES DESSINS**

- La Figure 1 (A, B, C, D) qui n'illustre pas l'invention, est un schéma qui montre les étapes de la formation de la microstructure autour de la préforme C/C. (A) Le liquide s'infiltre dans les pores de la préformes. (B) HfC germe contre l'interface de PyC. (C) Les carbures HfC croissent. (D) Une phase continue de SiC se forme comme matrice des carbures HfC, puis une troisième couche composée de carbures et de phases métalliques résiduelles se forme. [YE 2012].
- La Figure 2 est une photographie prise au Microscope Electronique à Balayage à détecteur d'électrons secondaire (MEB-SE) qui montre la morphologie d'une pastille de graphite 2175.
  L'échelle portée sur la Figure 2 représente 100 $\mu$m.
- La Figure 3 est une photographie prise au Microscope Electronique à Balayage à détecteur d'électrons secondaire (MEB-SE) qui montre la morphologie d'une pastille de graphite 6103.
  L'échelle portée sur la Figure 3 représente 300 $\mu$m.
- La Figure 4 est une photographie prise au Microscope Electronique à Balayage à détecteur d'électrons secondaire (MEB-SE) qui montre la morphologie d'un composite C/C 2D prédensifié par caléfaction.
  La flèche indique la direction des fibres dans le plan et le cercle indique les fibres perpendiculaires au plan.
  L'échelle portée sur la Figure 4 représente 1 mm.
- La Figure 5 est une photographie prise au Microscope Electronique à Balayage à détecteur d'électrons secondaire (MEB-SE) qui montre la morphologie d'un composite C/C 3D prédensifié par caléfaction.
  La flèche indique la direction des fibres dans le plan et le cercle indique les fibres perpendiculaires au plan.
  L'échelle portée sur la Figure 5 représente 1 mm.
- La Figure 6 est une vue schématique qui représente le banc de mouillage haute température utilisé dans les exemples.

- La Figure 7 est un graphique qui montre le programme de température (en trait gras) et de pression (en trait fin) appliqué pendant l'imprégnation et la pyrolyse d'une préforme par du brai (brai 110M de RUTGERS).
  En ordonnée à gauche est portée la température (en °C). En ordonnée à droite est portée la pression (en MPa). En abscisse est portée la durée du traitement (en heures).
- La Figure 8 représente des diagrammes de phase Hf-Si (en haut (A) selon GOKH 1989, en bas (B) selon ZHAO 2000).
- La Figure 9 représente le diagramme ternaire du système C-Hf-Si à 1300°C (selon RUDY 1969).
- La Figure 10 est une photographie prise au Microscope Electronique à Balayage à rétrodiffusion d'électrons (MEB-BSE) qui montre le profil d'infiltration de l'échantillon M1.
  L'échelle portée sur la Figure 10 représente 100 $\mu$m.
- La Figure 11 est une photographie prise au Microscope Electronique à Balayage à rétrodiffusion d'électrons (MEB-BSE) qui montre le profil d'infiltration de l'échantillon M2.
  L'échelle portée sur la Figure 11 représente 200 $\mu$m.
- La Figure 12 est une photographie prise au Microscope Electronique à rétrodiffusion d'électrons (MEB-BSE) qui montre le profil d'infiltration de l'échantillon M3.
  L'échelle portée sur la Figure 12 représente 200 $\mu$m.
- La Figure 13 est une photographie prise au Microscope Electronique à rétrodiffusion d'électrons (MEB-SE) qui montre l'interface d'infiltration de l'échantillon M1.
  L'échelle portée sur la Figure 13 représente 20 $\mu$m.
- La Figure 14 est une photographie prise au Microscope Electronique à rétrodiffusion d'électrons (MEB-SE) qui montre l'interface d'infiltration de l'échantillon M2.
  L'échelle portée sur la Figure 14 représente 20 $\mu$m.
- La Figure 15 est une photographie prise au Microscope Electronique à rétrodiffusion d'électrons (MEB-SE) qui montre l'interface d'infiltration de l'échantillon M3.
  L'échelle portée sur la Figure 15 représente 20 $\mu$m.
- La Figure 16 est une photographie prise au Microscope Electronique à rétrodiffusion d'électrons (MEB-BSE) qui montre les pores de l'échantillon M2 comblés par des carbures SiC (gris clair) et HfC (blanc).
  L'échelle portée sur la Figure 16 représente 10 $\mu$m.
- La Figure 17 est une photographie de l'échantillon M2 prise au Microscope Electronique à Balayage à détecteur d'électrons secondaire (MEB-SE) qui montre une phase métallique résiduelle intrapore.
  L'échelle portée sur la Figure 17 représente 5 $\mu$m.
- La Figure 18 est une photographie prise au Microscope Electronique à rétrodiffusion d'électrons (MEB-BSE) qui montre l'infiltration et les carbures SiC/HfC au sein de l'échantillon M3.
  L'échelle portée sur la Figure 18 représente 50 $\mu$m.
- La Figure 19 est une photographie prise au Microscope Electronique à rétrodiffusion d'électrons (MEB-BSE) qui montre le profil d'infiltration de l'échantillon M4.
  L'échelle portée sur la Figure 19 représente 100 $\mu$m.
- La Figure 20 est une photographie prise au Microscope Electronique à rétrodiffusion d'électrons (MEB-BSE) qui montre le profil d'infiltration de l'échantillon A.
  L'échelle portée sur la Figure 20 représente 100 $\mu$m.
- La Figure 21 est une photographie prise au Microscope Electronique à rétrodiffusion d'électrons (MEB-BSE) qui montre le profil d'infiltration de l'échantillon M5.
  L'échelle portée sur la Figure 21 représente 100 $\mu$m.
- La Figure 22 est une photographie prise au Microscope Electronique à rétrodiffusion d'électrons (MEB-BSE) qui montre l'interface d'infiltration de l'échantillon A.
  L'échelle portée sur la Figure 22 représente 100 $\mu$m.
- La Figure 23 est une photographie prise au Microscope Electronique à rétrodiffusion d'électrons (MEB-BSE) qui montre le front d'infiltration de l'échantillon A.
  L'échelle portée sur la Figure 23 représente 100 $\mu$m.
- La Figure 24 est une photographie prise au Microscope Electronique à rétrodiffusion d'électrons (MEB-BSE) qui montre l'interface d'infiltration de l'échantillon A poli ioniquement.
  L'échelle portée sur la Figure 24 représente 10 $\mu$m.
- La Figure 25 est une photographie prise au Microscope Electronique à rétrodiffusion d'électrons (MEB-BSE) qui montre dans l'échantillon A le multicouche SiC/HfC dans un pore infiltré à 150 $\mu$m de la surface.
  L'échelle portée sur la Figure 25 représente 5 $\mu$m.
- La Figure 26 est une photographie prise au Microscope Electronique à rétrodiffusion d'électrons (MEB-BSE) qui montre dans l'échantillon B un pore contenant des carbures et une phase métallique résiduelle.
  L'échelle portée sur la Figure 26 représente 50 $\mu$m.

- La Figure 27 est une photographie prise au Microscope Electronique à rétrodiffusion d'électrons (MEB-BSE) qui montre dans l'échantillon C un pore contenant un alliage nappant les carbures SiC et HfC.
  L'échelle portée sur la Figure 27 représente 50 $\mu$m.
- La Figure 28 est une photographie prise au Microscope Electronique à rétrodiffusion d'électrons (MEB-BSE) qui montre l'interface d'infiltration de l'échantillon D.
  L'échelle portée sur la Figure 28 représente 1 mm
- La Figure 29 est une photographie prise au Microscope Electronique à rétrodiffusion d'électrons (MEB-BSE) qui montre l'infiltration au sein de l'échantillon D.
  L'échelle portée sur la Figure 29 représente 400 $\mu$m.
- La Figure 30 est une photographie prise au Microscope Electronique à rétrodiffusion d'électrons (MEB-BSE) qui montre dans l'échantillon D, un pore comblé par les carbures SiC et HfC, et aucune phase métallique.
  L'échelle portée sur la Figure 30 représente 50 $\mu$m.
- La Figure 31 est une photographie prise au Microscope Electronique à rétrodiffusion d'électrons (MEB-BSE) qui montre dans l'échantillon D, un pore comblé par les carbures SiC et HfC présentant une micro-inclusion de métal non carburé.
  L'échelle portée sur la Figure 31 représente 40 $\mu$m.
- La Figure 32 est une photographie prise au Microscope Electronique à rétrodiffusion d'électrons (MEB-BSE) qui montre l'infiltration de HfSi$_2$ au sein de l'échantillon E.
  L'échelle portée sur la Figure 32 représente 1 mm.
- La Figure 33 est une photographie prise au Microscope Electronique à rétrodiffusion d'électrons (MEB-BSE) qui montre des carbures HfC nappant les fibres et la surface de l'échantillon E.
  L'échelle portée sur la Figure 33 représente 100 $\mu$m.
- La Figure 34 est une photographie prise au Microscope Electronique à rétrodiffusion d'électrons (MEB-BSE) qui montre dans l'échantillon E la microstructure des pores infiltrés après RMI avec un multicouche.
  L'échelle portée sur la Figure 34 représente 10 $\mu$m.
- La Figure 35 est une photographie prise au Microscope Electronique à rétrodiffusion d'électrons (MEB-BSE) qui montre dans l'échantillon E des canaux d'infiltration.
  L'échelle portée sur la Figure 35 représente 20 $\mu$m.
- La Figure 36 est une photographie prise au Microscope Electronique à rétrodiffusion d'électrons (MEB-BSE) qui montre dans l'échantillon E un pore carburé comprenant une cavité fermée.
  L'échelle portée sur la Figure 36 représente 20 $\mu$m.
- La Figure 37 est une photographie prise au Microscope Electronique à rétrodiffusion d'électrons (MEB-BSE) qui montre dans l'échantillon E un pore entièrement carburé sans cavité fermée.
  L'échelle portée sur la Figure 37 représente 10 $\mu$m.
- La Figure 38 est une photographie prise au Microscope Electronique à rétrodiffusion d'électrons (MEB-BSE) qui montre le profil d'infiltration de l'échantillon F.
  L'échelle portée sur la Figure 38 représente 1 mm.
- La Figure 39 est une photographie prise au Microscope Electronique à rétrodiffusion d'électrons (MEB-BSE) qui montre dans l'échantillon F des pores et des canaux comblés par des carbures et/ou recouverts de carbure.
  L'échelle portée sur la Figure 39 représente 100 $\mu$m.
- La Figure 40 est une photographie prise au Microscope Electronique à rétrodiffusion d'électrons (MEB-BSE) qui montre dans l'échantillon F des micropores comblés majoritairement par du SIC et des macropores comblés majoritairement par du HfC.
  L'échelle portée sur la Figure 40 représente 100 $\mu$m.
- La Figure 41 est une photographie prise au Microscope Electronique à rétrodiffusion d'électrons (MEB-BSE) qui montre dans l'échantillon F la microstructure en multicouche de la surface et des pores.
  L'échelle portée sur la Figure 41 représente 20 $\mu$m.
- La Figure 42 est une photographie prise au Microscope Electronique à rétrodiffusion d'électrons (MEB-BSE) qui montre l'infiltration de l'échantillon G.
  L'échelle portée sur la Figure 42 représente 400 $\mu$m.
- La Figure 43 est une photographie prise au Microscope Electronique à rétrodiffusion d'électrons (MEB-BSE) qui montre dans l'échantillon G des espaces inter-fils comblés par des carbures SiC/HfC.
  L'échelle portée sur la Figure 43 représente 20 $\mu$m.
- La Figure 44 est une photographie prise au Microscope Electronique à rétrodiffusion d'électrons (MEB-BSE) qui montre l'infiltration de l'échantillon H.
  L'échelle portée sur la Figure 44 représente 50 $\mu$m.
- La Figure 45 est une photographie prise au Microscope Electronique à rétrodiffusion d'électrons (MEB-BSE) qui montre l'infiltration inter-fils et inter-fibres de l'échantillon H.

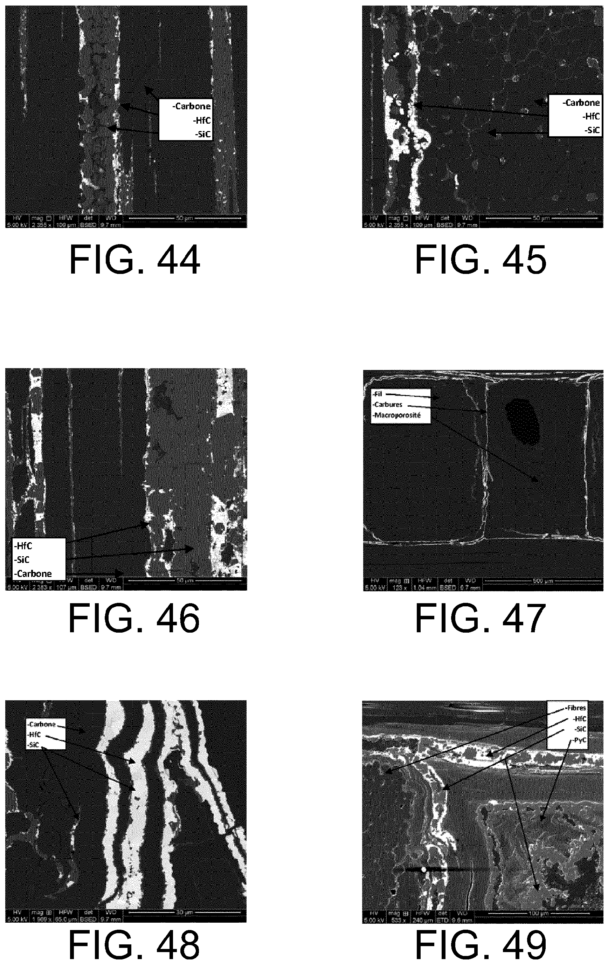

L'échelle portée sur la Figure 45 représente 50 $\mu$m.
- La Figure 46 est une photographie prise au Microscope Electronique à rétrodiffusion d'électrons (MEB-BSE) qui montre l'infiltration et l'étalement des carbures HfC de l'échantillon H.
  L'échelle portée sur la Figure 46 représente 50 $\mu$m.
- La Figure 47 est une photographie prise au Microscope Electronique à rétrodiffusion d'électrons (MEB-BSE) qui montre l'infiltration inter-fils au sein de l'échantillon I.
  L'échelle portée sur la Figure 47 représente 500 $\mu$m.
- La Figure 48 est une photographie prise au Microscope Electronique à rétrodiffusion d'électrons (MEB-BSE) qui montre le multicouche C/SiC/HfC/SiC/C au sein de l'échantillon I.
  L'échelle portée sur la Figure 48 représente 30 $\mu$m.
- La Figure 49 est une photographie prise au Microscope Electronique à rétrodiffusion d'électrons (MEB-BSE) qui montre des couches de PyC et de carbures au sein de l'échantillon I.
  L'échelle portée sur la Figure 49 représente 100 $\mu$m.

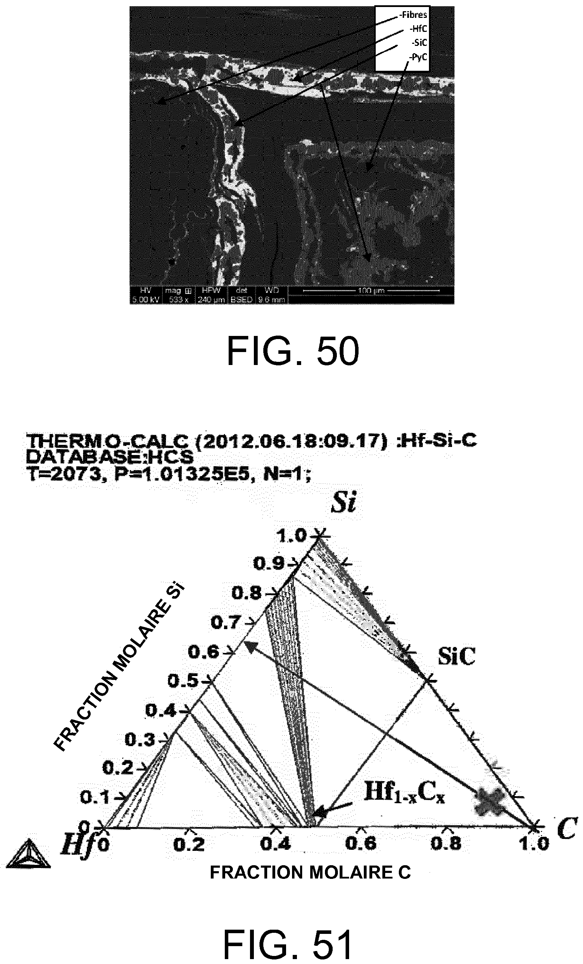

- La Figure 50 est une photographie prise au Microscope Electronique à rétrodiffusion d'électrons (MEB-BSE) qui montre des couches de PyC et de carbures au sein de l'échantillon I.
  L'échelle portée sur la Figure 50 représente 100 $\mu$m.
- La Figure 51 représente le diagramme ternaire Hf-Si-C à 1800°C.

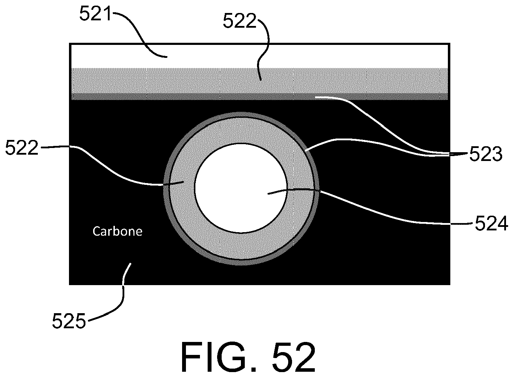

- La Figure 52 est un schéma simplifié de la structure observée à la surface ainsi qu'à l'intérieur des pores.

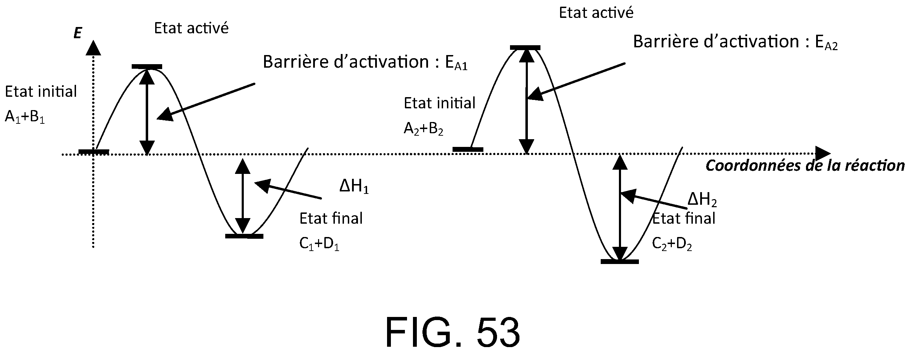

- La Figure 53 est un graphique qui montre l'énergie d'activation de réactions chimiques $A_x + B_x \rightarrow c_x + D_x$.

## EXPOSÉ DÉTAILLÉ DE MODES DE RÉALISATION PARTICULIERS

L'invention va maintenant être décrite en référence aux exemples suivants, qui sont en dehors de la portée des revendications et donnés à titre illustratif et non limitatif.

### 1. Matériaux, Matériels et Méthodes.

### 1.1. Matières premières.

a) Les poudres métalliques.

Le tableau ci-dessous présente les poudres métalliques ou de composés intermétalliques utilisées pour réaliser les alliages d'infiltration.

| Poudre | Fournisseur | Pureté | Granulométrie |
|---|---|---|---|
| Hf | Alfa Aesar® | 99,6% (hors Zr) 3,5% nominal de Zr | $d_{50}$=44 $\mu$m |
| Si | Alfa Aesar® | 99,9% | $d_{50}$=10 $\mu$m |
| HfSi$_2$ | Neyco® | 99,5% | $d_{50}$=44 $\mu$m |
| ZrSi$_2$ | Neyco® | 99,5% | $d_{50}$=44$\mu$m |

Les alliages utilisés pour réaliser les infiltrations réactives ont été synthétisés à partir de ces poudres.
Les poudres sont mélangées puis comprimées sous une force de 2 tonnes en pastilles de diamètre 5 mm, à l'aide d'une pastilleuse Specac®.
Les pastilles sont ensuite fractionnées en plusieurs morceaux qui servent à l'infiltration réactive.

b) Les préformes carbonées

Deux types de préformes ont été utilisées : des pastilles poreuses de graphite et des matériaux composites C/C.
Les porosités ouvertes ont été déterminées par mesure de poussée d'Archimède.
Sur certaines préformes, un forage a été effectué afin de contenir l'étalement de l'alliage sur la face supérieure de la préforme lors de l'infiltration réactive. Les trous ont été réalisés manuellement via une mini-perceuse Dremel® et un foret de 3 mm de diamètre.

• Pastilles de graphite

Deux séries de pastilles de graphite de l'entreprise Mersen[®] ont servi à réaliser des infiltrations.

Les pastilles ont un diamètre de 10 mm et une hauteur de 3 mm, soit un volume de 235 mm$^3$.

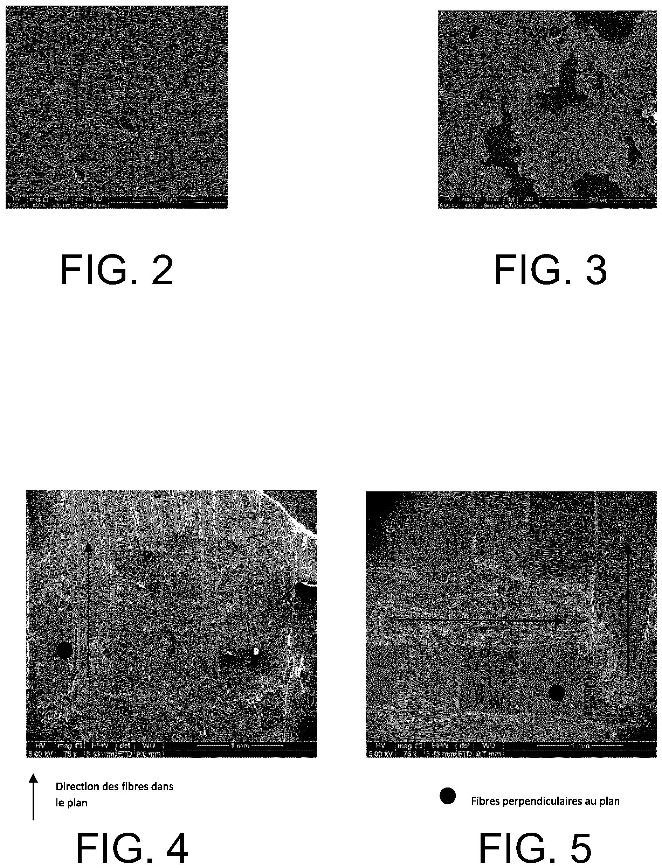

La qualité 2175 (Figure 2) est une pastille de graphite isostatique dont la porosité ouverte moyenne est de 12%. La taille des pores est comprise entre 1 et 20 $\mu$m.

La qualité 6103 (Figure 3) est une pastille de graphite extrudé dont la porosité ouverte moyenne est de 13,5%. Les pores sont irréguliers et leur taille est comprise entre 1 $\mu$m et plusieurs centaines de microns.

• Matériaux composites C/C.

Des infiltrations réactives ont aussi été réalisées sur des matériaux composites C/C 2D et 3D de type Kalamazoo fournis par le CEA Le Ripault.

Ces composites sont obtenus à partir d'une préforme 2D ou 3D orthogonale. La préforme est tout d'abord réalisée par tissage de fibres ex-PAN.

Dans la préforme 3D, les fibres sont regroupées en fils denses et occupent 44% du volume de la préforme. Les macropores inter-fils sont des parallélépipèdes de plusieurs centaines de micromètres de côté. Ils sont interconnectés uniquement par leur sommet [FITZ 1998].

La préforme ayant été tissée, elle est pré-densifiée par caléfaction.

Pour cela, la préforme est maintenue dans un tissu carboné et placée dans un réacteur rempli d'hydrocarbure. La température est portée à 1100°C. Dès 800°C, les réactions de craquage des hydrocarbures débutent. Des espèces aromatiques plus denses que le liquide sont alors synthétisées. La température de 1100°C correspond au dépôt de pyrocarbone dense et graphitable sur les fibres. La durée du palier dépend de la préforme utilisée et de la densité souhaitée [DEKE 2010].

Durant ce procédé, les hydrocarbures bouillent et changent de couleur.

Les morceaux de « *Kalamazoo 2D* » utilisés ont un volume compris entre 350 et 450mm$^3$ et une porosité ouverte moyenne de 9,5%, alors que les Kalamazoo 3D ont une porosité ouverte comprise entre 15 et 20% (voir figures 4 et 5).

**1.2. Outils d'études.**

a) Four de traitement thermique 2000°C.

Les composites C/C utilisés ayant été pré-densifiés par caléfaction à une température maximale de 1100°C, de nombreux résidus organiques sont présents dans les préformes.

Les infiltrations réactives ayant lieu à des températures supérieures à 1600°C, il est nécessaire de réaliser préalablement un traitement thermique pour éliminer les résidus susceptibles de limiter ou empêcher le bon déroulement de la RMI.

Pour cela un four inductif de traitement thermique a été utilisé. Les échantillons sont disposés dans un creuset graphite au centre de la bobine d'induction, puis l'enceinte est mise sous vide secondaire grâce à une pompe à palette assistée d'une pompe turbo-moléculaire.

Une fois le vide secondaire atteint, le programme de traitement thermique est lancé. Ce traitement thermique comprend des rampes thermiques de chauffage et de refroidissement de 10°C/min et un palier de 4 heures à 1800°C.

b) Banc de mouillage haute-température.

Toutes les infiltrations réactives en phase liquide effectuées lors de cette étude l'ont été sur un banc de mouillage haute-température.

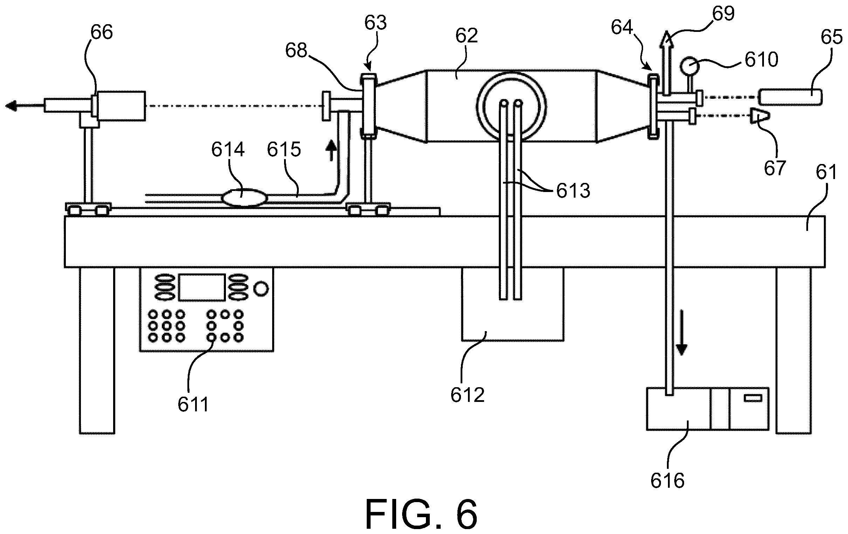

La Figure 6 présente les différents éléments de ce banc de mouillage « HT ».

Ce banc de mouillage comprend un plateau en marbre (61) sur lequel est placé un four inductif à parois froides comprenant une enceinte à double paroi (62), pourvue de deux hublots (63, 64) permettant la visée pyrométrique à l'aide d'un dispositif (Ircon MODLINE 5[®]) (65), ainsi que la capture d'image à l'aide d'une caméra CCD munie d'un objectif (66). En face du hublot (64) est également prévue une lampe à réglage optique (67). Le four est également équipé d'un porte échantillon (68), d'une vanne de purge (69) et d'un manomètre (610).

Le banc comprend en outre un générateur (Five Celes MP 3[®]) haute fréquence (611) d'une puissance de 12kW. Le banc de manipulation est qualifié pour des températures maximales de 1800°C. Cette température n'étant pas limitée par le générateur HF (611) mais par les mesures de sécurité et le système de refroidissement du four inductif.

La bobine d'induction est reliée à un coffret « HF » (612) par l'intermédiaire d'arrivées de courant (613).

Le refroidissement des parois du four est assuré par un circuit d'eau froide.

Le four peut travailler sous atmosphère statique d'argon, balayage d'argon amené par une canalisation (615) munie d'un épurateur d'argon (614) ou bien sous vide primaire établi grâce à une pompe à vide primaire (616). Le générateur (611) ayant une grande puissance, la température maximale de 1800°C est atteinte en 40 secondes, ce qui équivaut à une rampe de montée en température de 2700°C/min. Le refroidissement n'est pas linéaire : dès la fin du palier, la température va diminuer de 800°C en 30 secondes et ensuite ralentir.

L'échantillon est placé dans un suscepteur en carbone, lui-même disposé au centre de la bobine d'induction lorsque le four est fermé. L'échantillon doit avoir une hauteur maximale inférieure à 7 mm et un diamètre inférieur à 14 mm.

Les préformes sont alimentés de façon directe en métal, en plaçant des morceaux compacts de poudre d'environ 8 à 12 mm$^3$ au-dessus de la préforme. Ce volume est limité par les dimensions du suscepteur.

Il est à noter que le pyromètre (65) a été recalibré pendant l'étude, ainsi l'écart de température entre la consigne et la température au centre du suscepteur a été corrigé et est inférieur à 3°C. Le recalibrage a été réalisé en étudiant la fusion et le mouillage du cuivre et du silicium sur le carbone.

c) Four autoclave pour la pyrolyse de brai.

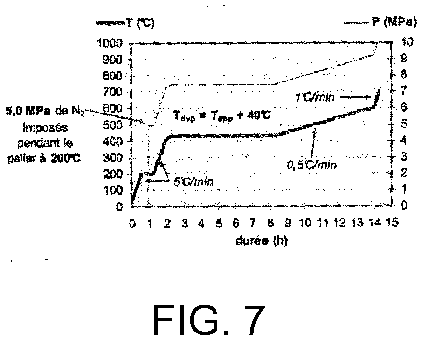

Afin de réaliser un dépôt de Pyrocarbone PyC sur certains échantillons, une imprégnation et une pyrolyse de brai sont réalisées dans un autoclave sous une atmosphère de diazote en suivant le programme présenté sur la Figure 7.

Le brai utilisé est le 110M du fournisseur Rutgers®. La pyrolyse est menée sous une pression modérée, avec une vitesse de montée en température faible pour limiter le moussage du brai.

L'imprégnation a lieu à 200°C sous vide statique : le brai étant fondu dès 150°C, les préformes l'absorbent. Puis la pression de diazote est progressivement augmentée jusqu'à 5 MPa afin non seulement d'améliorer la pénétration du brai liquide dans l'échantillon mais aussi de contenir le brai fondu dans la préforme lors de la montée en température. Avec la température, la pression va augmenter jusqu'à 10 MPa.

Une fois la pyrolyse effectuée, il est nécessaire d'évacuer les hétéro-atomes de l'échantillon. Pour cela, une carbonisation est réalisée dans un four tubulaire sous un balayage de diazote. L'échantillon, disposé dans un creuset en alumine, est chauffé à la vitesse de 10°C/min jusqu'à 600°C, puis à la vitesse de 5°C/min et maintenu à 1100°C pendant 5h.

**1.3. Préparation à la caractérisation.**

Une fois les mouillages réactifs effectués, il est nécessaire de les préparer pour les différents outils de caractérisation.

Pour cela, les échantillons sont, dans un premier temps, coupés longitudinalement par rapport au sens d'infiltration à l'aide d'une mini-tronçonneuse à disque diamanté ou bien d'une mini-scie à fil diamanté.

Après la découpe, une moitié de ces échantillons est enrobée dans une résine époxy.

Pour cela, on utilise le produit disponible auprès de la société Struers® sous la dénomination Specifix 2®, qui est composé d'une résine liquide et d'un durcisseur liquide qu'il faut mélanger respectivement dans un rapport de 7 pour 1.

Une fois la solution homogénéisée pendant 5 minutes, cette dernière est placée quelques minutes dans un appareil d'imprégnation sous vide disponible auprès de la société Struers sous la dénomination Epovac® qui permet d'évacuer l'air présent dans le mélange en faisant le vide.

La solution est ensuite versée dans le plot creux ou moule contenant l'échantillon à enrober, celui-ci ayant la face destinée à l'observation contre le fond.

Un second passage dans l'appareil d'imprégnation sous vide permet de retirer les bulles d'air qui auraient pu s'immiscer dans la résine lors du transvasement de la résine. Le plot de résine avec l'échantillon est alors laissé à température ambiante pendant 12 heures, afin que la résine polymérise complètement et ainsi qu'elle durcisse.

Les échantillons ayant été enrobés, il est nécessaire d'effectuer un polissage mécanique pour non seulement retirer le surplus de résine qui est sur la surface à observer de l'échantillon, mais aussi pour aplanir cette surface afin de faciliter la caractérisation des échantillons par les microscopes optiques.

Le polissage est amorcé manuellement sur un disque abrasif SiC de grain 120, il est ensuite poursuivi sur une polisseuse Struers Tegra Force 5® selon une gamme de polissage mécanique prédéfinie par le laboratoire pour les matériaux C/C comprenant des carbures.

Les temps et forces utilisés dans cette gamme ont été adaptés pour les échantillons dont le substrat était constitué par une pastille de graphite afin de prévenir l'arrachement et la réinsertion de certains carbures HfC formés dans le substrat.

**Tableau 3 - Récapitulatif d'une séquence suivie sur la Polisseuse Struers Tegra Force 5**

| Récapitulatif Polissage fin | | | |
|---|---|---|---|
| **Disque utilisé** | **Durée** | **Force** | **Apport** |
| Grille grain 220 | 4' | 25N | eau |
| Grille grain 600 | 3'30" | 25N | eau |
| Grille grain 1200 | 3'30" | 25N | eau |
| Drap 9 $\mu$m | 6' | 20N | Liquide diamanté 8 |
| Drap 3 $\mu$m | 5' | 20N | Liquide diamanté 10 |
| Drap 1 $\mu$m | 4' | 20N | Liquide diamanté 12 |

Entre chaque passe de polissage, les échantillons enrobés sont nettoyés dans un bécher rempli d'eau avec un passage d'une minute au bac à ultrasons.

Afin d'observer les interfaces de réaction le plus précisément possible, certains échantillons ont subi un polissage ionique à l'aide d'une polisseuse Cross Section Polisher SM-09010 de la société Jeol®.

**1.4. Outils & Méthodes de caractérisation.**

Les échantillons ont été observés par microscopie optique et microscopie électronique. Le microscope optique utilisé est un microscope de la société Reichert-Jung® inversé MeF3.

La majeure partie des observations a été réalisée au Microscope Electronique à Balayage (MEB) Quanta 400F®.

Ce MEB utilise un canon à émission de champ et dispose d'un détecteur d'électrons secondaires, d'un détecteur d'électrons rétrodiffusés, et d'un détecteur EDXS.

Le canon à émission de champ permet de travailler avec des faibles tensions accélératrices (< 6kV) sans que la brillance soit atténuée comme sur les MEB à filament de tungstène.

Les électrons secondaires sont des électrons de coeur des atomes de l'échantillon. Ceux-ci sont attirés par le détecteur placé sur le côté de l'échantillon qui les « capture » via une grille polarisée. Les électrons sont alors transformés en photons par un photomultiplicateur puis de nouveau transformés en électrons, ce qui permet de purifier le signal. Le contraste est contrôlé par le nombre de dynodes au sein du photomultiplicateur, il ne donne aucune information sur la composition chimique.

Les électrons rétrodiffusés sont réémis suite à des interactions élastiques, ils ont donc une énergie moins importante (50 eV). Cette technique d'observation permet d'avoir des informations sur la composition chimique de l'échantillon. En effet, les éléments lourds interagissant plus avec le faisceau incident, ils apparaissent plus clairs.

Le détecteur EDXS permet d'analyser le rayonnement X de l'échantillon. Cette technique permet une semi-quantification de la composition chimique de l'échantillon étudié grâce aux énergies propres d'émission de chaque élément chimique.

Le logiciel utilisé pour l'analyse EDXS est le logiciel EDAX Genesis®.

**1.5. Paramètres expérimentaux.**

Cette partie résume les différents paramètres utilisés lors des infiltrations réactives en phase liquide :

| Nom de l'échantillon | M1 | M2 | M3 | M4 | M5 |
|---|---|---|---|---|---|
| Substrat | Pastille 2175 | Graphite 2175 | Pastille 2175 | Pastille 2175 | Pastille 2175 |
| Mélange utilisé (% at.) | 68Si32Hf | 72Si28Hf | 82Si18Hf | 66Si34Hf | 75Si25Hf |
| Poudres de préparation | Hf+Si | Hf+Si | Hf+Si | Hf+Si | HfSi$_2$+Si |
| Temp. maximale d'infiltration | 1750°C | 1750°C | 1750°C | 1700°C | 1700°C |
| Temps de palier | 5 min | 5 min | 5 min | 5 min | 5min |

| Nom de l'échantillon | A | B | C | D | E | F | G | H | I |
|---|---|---|---|---|---|---|---|---|---|
| Substrat | Past 2175 | Past 6103 | Past 6103 | Past 6103 | C/C 2D | C/C 3D | C/C3D | C/C 3D | C/C 3D |
| 1$^{er}$ composé utilisé | HfSi$_2$ | HfSi$_2$ | HfSi$_2$ | HfSi$_2$ | HfSi$_2$ | HfSi$_2$ | HfSi$_2$ | HfSi$_2$ | HfSi$_2$ |
| 1ère Tmax de RMI | 1700°C | 1600°C | 1800°C | 1800°C | 1800°C | 1800°C | 1800°C | 1800°C | 1800°C |
| 1$^{er}$ temps de palier | 5 min | 5 min | 2 min | 15 min | 5 min | 15 min | 15 min | 15 min | 15 min |
| 2$^{ème}$ composé | NC | | | | | | | Si | Si |
| 2$^{ème}$ Tmax de RM | | | | | | | | 1600°C | 1600°C |
| 2$^{ème}$ Temps de palier | | | | | | | | 5 min | 5 min |
| NB : « Past » signifie pastille. | | | | | | | | | |

EP 2 964 590 B1

Le volume de métal utilisé est compris entre 20% et 30% du volume de porosité ouverte du substrat, ce volume est limité par les dimensions du suscepteur graphite du banc de mouillage, ainsi que la taille des préformes utilisées.

**2. Résultats.**

**2.1. Sélection de l'alliage d'infiltration.**

La principale contrainte dans le choix de l'alliage est ici la température maximale d'utilisation du banc de mouillage qui est de 1800°C.

On a vu plus haut que l'infiltration réactive en phase liquide dans les matériaux C/C a été développée principalement pour la synthèse de SiC à partir du silicium.

a) Sélection du système binaire

Le comportement des éléments ultra-réfractaires Hf, Ta et W étant similaire, les expériences effectuées dans le cadre de cette étude se sont concentrées sur l'élément hafnium.

En conséquence, le seul système binaire étudié est le système Hf-Si.

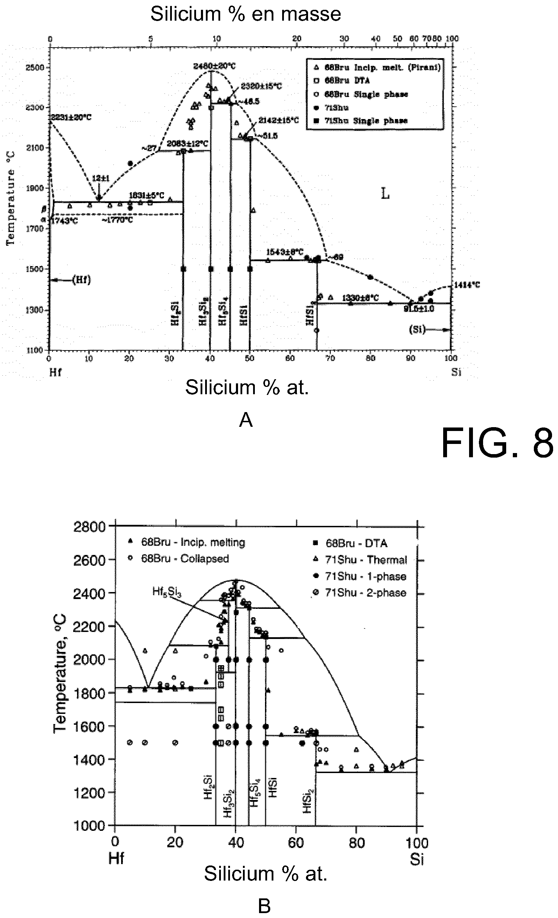

Deux diagrammes binaires du système Hf-Si, extraits des documents de GOKH 1989 et de ZHAO 2000, sont présentés sur la Figure 8 (A, B).

Les températures de fusion des phases riches en hafnium : à gauche du composé intermétallique HfSi sont supérieures à 1800°C.

Ainsi seules les compositions à droite de HfSi peuvent être utilisées dans le cadre de cette étude.

Il s'avère que cette partie droite du diagramme de phase a été nettement moins étudiée dans la littérature que l'autre, ce qui induit une incertitude assez grande sur les températures de liquidus.

L'utilisation d'alliages composés de moins de 50% d'Hf avec une température de fusion maximale de 1800°C implique que les seules phases pouvant se former à l'équilibre au refroidissement sont : $HfSi_2$, HfSi et une solution solide de silicium.

Le silicium forme avec le carbone un seul carbure qui est un composé défini ayant une température de fusion incongruente supérieure à 2700°C.

L'hafnium forme un seul carbure avec un domaine d'existence : $Hf_{1-x}C_x$, x étant compris entre 34,5 et 49,5 % atomiques.

Les enthalpies de formations des carbures SiC et HfC à 25°C sont respectivement de -68kJ.mol$^{-1}$ et de -209,6kJ.mol$^{-1}$ [VOIG 2011].

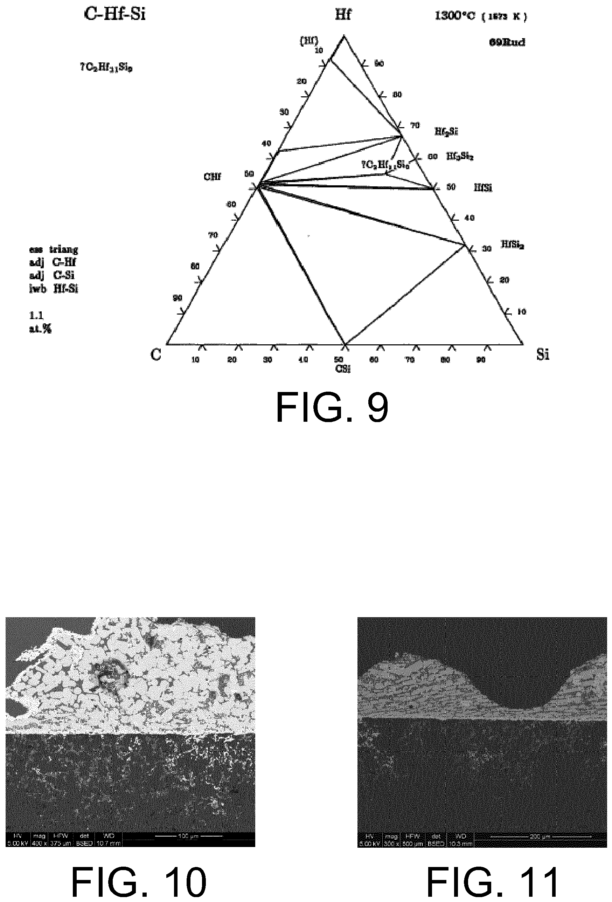

Le diagramme ternaire du système C-Hf-Si à 1300°C, présenté dans le document de [RUDY 1969] (Figure 9), peut être utilisé pour prévoir les phases qui seront en coexistence à l'équilibre après l'infiltration réactive.

Seul le composé intermétallique disiliciure d'hafnium : $HfSi_2$ peut être à l'équilibre en présence conjointe de SiC et de HfC.

Le silicium peut être à l'équilibre avec le carbure de silicium.

De la même façon, le composé intermétallique HfSi peut être à l'équilibre avec le carbure HfC et $HfSi_2$.

Il sera donc nécessaire dans la suite de porter une attention particulière à l'absence de phase métallique résiduelle riche en silicium ou de HfSi après les traitements de RMIs.

b) Etudes d'alliages ternaires

Afin d'augmenter le pourcentage d'hafnium dans l'alliage, différents systèmes ternaires ont été envisagés. Parmi eux :

- Le système C-Hf-Si, c'est-à-dire l'intégration de poudre de carbone dans l'alliage Hf-Si en poudre, a été évoqué, car le carbone aurait eu un rôle non seulement de fondant, mais aussi de limitant pour la formation de composés intermétalliques.

Toutefois la réactivité de l'hafnium et du silicium avec le carbone est trop importante, le carbone aurait donc réagi instantanément avec l'alliage fondu pour former des carbures.

De plus, le carbone limiterait l'infiltration du liquide dans la préforme en concentrant la réaction à la surface de la préforme.

Ce système est donc intéressant pour la formation de carbure à la surface d'un matériau carboné, mais semble inadapté à l'infiltration réactive.

- Le système Cr-Hf-Si. Le chrome forme des carbures et des siliciures dont la température de fusion est inférieure à 2000°C, ce système n'a donc pas été retenu.

- Le système Cu-Hf-Si. Le cuivre est un élément fondant qui ne forme pas de carbure mais seulement des siliciures. En conséquence, il peut limiter la formation de SiC, de HfSi et de $HfSi_2$, au profit de la formation de HfC. Les siliciures formés par le cuivre sont à bas point de fusion et ont un faible mouillage avec le carbone, cependant la dissolution de ces derniers n'est pas facilement réalisable. En effet, un simple traitement thermique ne permettra pas de les éliminer s'ils sont incorporés au coeur de l'échantillon, recouverts ou entremêlés avec les grains des différents carbures. Ce système n'a donc pas été retenu.

- Le système Hf-Ni-Si. Les siliciures de nickel ont une température de fusion trop basse ($T_f$=1010°C) et mouillent le carbone, il est donc difficile de les éliminer de la préforme une fois l'infiltration réactive réalisée. Ce système n'a donc pas été retenu.

- Les systèmes Hf-Si-V et Hf-Si-Y. Vanadium et yttrium forment des siliciures ayant des températures de fusion légèrement inférieures à 2000°C et mouillent le carbone. Ce système n'a donc pas été retenu.

Malgré l'étude de [YE 2012], le système Hf-Si-Zr n'a pas été étudié car le zirconium ne diminue pas significativement la température de fusion de l'alliage d'infiltration. Ainsi l'utilisation d'un alliage ternaire pour diminuer la température de fusion de l'alliage d'infiltration et augmenter la proportion d'hafnium ne semble pas facilement réalisable.
Seul le système C-Hf-Si semble intéressant, si le souhait était de seulement réaliser un dépôt ou une couche de carbure à la surface d'une préforme.
En conséquence, le seul système réellement étudié dans ici est le système binaire Hf-Si.

## 2.2. Détermination de la composition optimale à partir du système Hf-Si.

Le système binaire Hf-Si ayant été sélectionné, il est nécessaire de déterminer quelle est la composition optimale pour réaliser l'infiltration réactive en phase liquide.
A partir des diagrammes de phase Hf-Si, différents mélanges de poudres métalliques ont été réalisés dans le but d'obtenir l'infiltration la plus homogène possible, présentant le minimum de phase métallique résiduelle après la RMI tout en ayant une proportion d'hafnium conséquente dans l'alliage pour former le plus de HfC possible.
Le tableau ci-après résume les différentes compositions sélectionnées et leurs températures de fusion.

**Tableau 4 - Récapitulatif des compositions Hf-Si sélectionnées et de leurs températures de fusion**

| Composition du mélange (% at.) ou composé | M4: 66Si34Hf | M1 : 68Si32Hf | M2: 72Si28Hf | M5 : 75Si25Hf | M3 : 82Si18Hf | A: $HfSi_2$ |
|---|---|---|---|---|---|---|
| $T_{fusion}$ (°C) [GOKH 1989] | 1710 | 1640 | 1520 | 1470 | 1420 | 1543 |
| $T_{fusion}$ (°C) [ZHAO 2000] | 2080 | 2000 | 1900 | 1700 | 1500 | 1543 |

Les infiltrations réactives présentées dans cette partie ont toutes été réalisées sur le même substrat : des pastilles de graphite 2175.

a) Etude des infiltrations réalisées à partir de poudres Hf et Si.

Dans un premier temps, seulement les compositions (% at) 68Si32Hf (M1), 72Si28Hf (M2), et 82Si18Hf (M3) ont été comparées.
Ces trois compositions ont été préparées à partir de poudres d'hafnium et de silicium mélangées, et compactées. L'infiltration a eu lieu pendant 5 minutes à 1750°C, les paramètres temps et températures étant fixés arbitrairement.
Les Figures 10, 11, et 12 montrent les profils d'infiltration des trois alliages M1, M2, et M3, réalisés à partir des poudres d'hafnium et de silicium.
La composition M1 n'a pas entièrement fondu, toutefois le métal résiduel est biphasé. L'analyse EDXS a permis de déterminer que la phase claire comprenait 30% at d'hafnium et le reste de silicium, ce qui peut être associé à la formation de la phase $HfSi_2$. La phase sombre comprend plus de 98% de silicium. Cette décomposition en deux phases concorde avec les diagrammes binaires Hf-Si présentés sur la Figure 10. La température et le temps de réaction ont permis de réaliser une infiltration jusqu'à une profondeur de 150 $\mu$m. Cette profondeur d'infiltration est équivalente à celle visible sur les échantillons M2 et M3. Ainsi dans ce cas, la profondeur d'infiltration ne semble pas dépendre de la composition de l'alliage.

Le mélange M2 est plus étalé sur la surface de l'échantillon que le M1. L'alliage est biphasé, les phases ont la même composition que celles précisée pour le 68Si32Hf. Enfin, le mélange M3 est celui qui s'est le plus étalé, l'alliage est aussi biphasé.

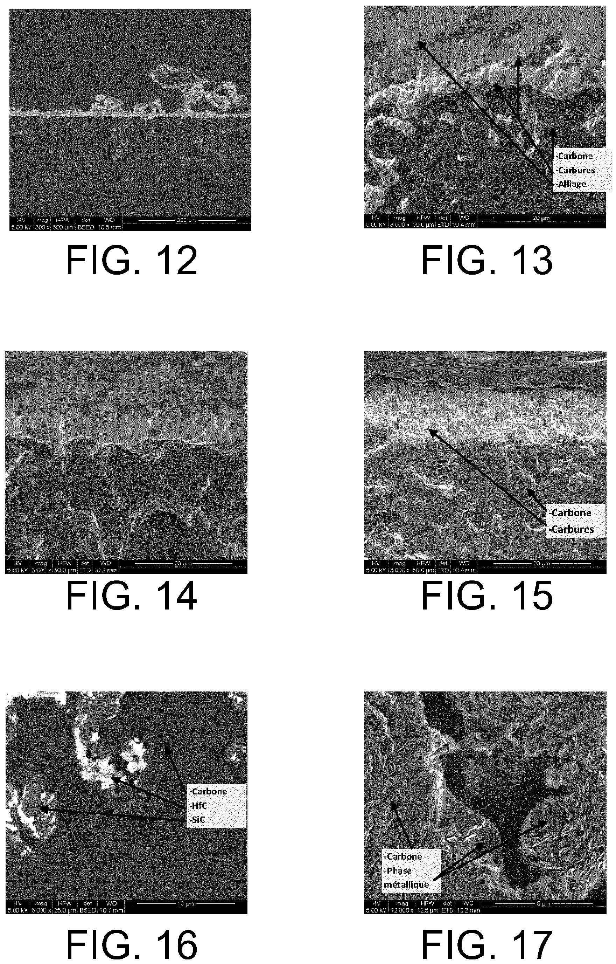

Les Figures 13, 14 et 15 mettent en évidence pour les trois échantillons, la présence d'une couche de carbure HfC à la surface de la préforme graphite. L'épaisseur de cette couche de carbure HfC semble varier avec la concentration d'hafnium de l'alliage initial : plus la composition est riche en hafnium, plus la couche semble fine.

Toutefois, l'échantillon M3 ne comportant que très peu d'alliage résiduel à la surface de la préforme aucun carbure HfC n'est inclus dans cet alliage, contrairement aux échantillons M1 et M2. (Figure 13 et Figure 14).

A l'intérieur des pastilles de graphite, les alliages ont réagi pour former des carbures SiC et HfC. Ces phases ont été analysées par pointé EDXS.

Ces carbures, visibles sur la Figure 16 sont présents dans les trois échantillons étudiés. Dans les échantillons M2 et M1, certains pores au niveau du front d'infiltration contiennent des phases métalliques résiduelles (Figure 17).

Une analyse EDXS détermine que cette phase comprend environ 97% at. de silicium et 3% at. d'hafnium, elle est donc en équilibre avec le SiC. Sur l'échantillon M3, aucune phase métallique n'a été observée.

Dans les trois échantillons, la répartition de l'hafnium au sein de l'infiltration est très hétérogène (Figures 10, 11 et 12) : des zones riches et d'autres appauvries en éléments lourds sont visibles, alors que l'infiltration et la concentration du silicium (en gris clair) sont régulières horizontalement.

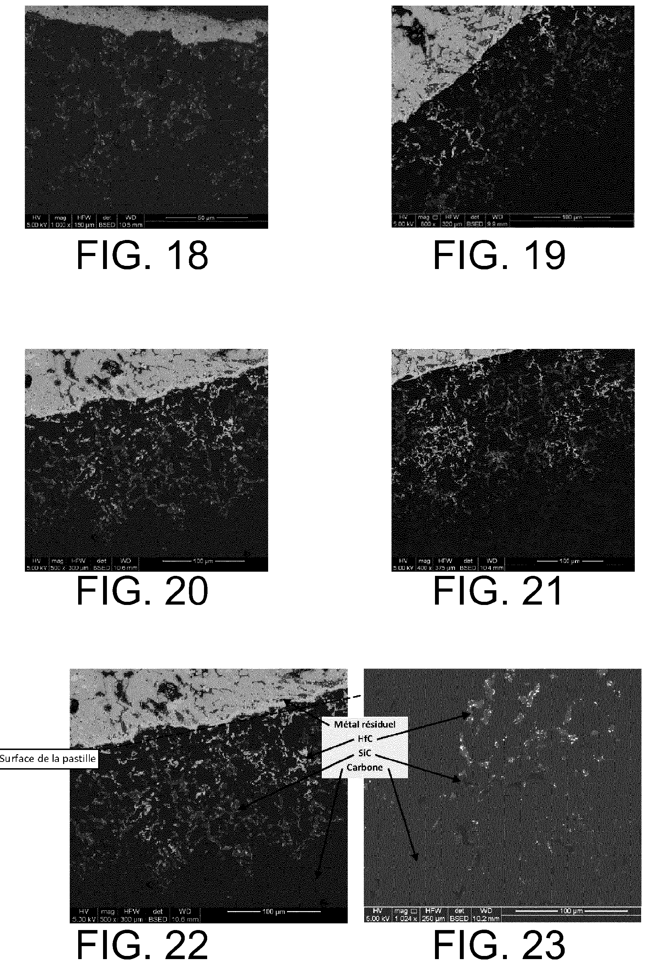

L'infiltration du mélange 82Si18Hf semble tout de même plus homogène que pour les deux autres échantillons (Voir Figure 18).

Cette observation a donc conduit à réaliser de nouvelles infiltrations à partir de poudre de silicium et d'HfSi$_2$, afin d'étudier si cette hétérogénéité provenait de l'utilisation de poudre d'hafnium qui n'est pas dissoute instantanément lors de la montée en température.

b) Etude des infiltrations réalisées à partir de poudres de HfSi$_2$ et Si

L'étude des trois échantillons précédents a révélé que l'utilisation de poudres d'hafnium et de silicium mélangées et compactées ne permettait pas de dissoudre entièrement l'hafnium dans la phase liquide durant le court palier de température de l'infiltration réactive.

De plus, la dissolution de l'hafnium s'effectuant pendant l'infiltration réactive, la dispersion d'Hf dans l'infiltration est très hétérogène : il y a des zones plus concentrées que d'autres en hafnium dans la préforme si un grain d'Hf a été rapidement dissout au-dessus de cette zone.

A partir de ces constats, l'utilisation de HfSi$_2$ a été envisagée non seulement pour réaliser les alliages mais aussi en tant que composé intermétallique d'infiltration.

HfSi$_2$ est un composé intermétallique dont la température de fusion est de 1543°C et l'enthalpie de formation à 25°C est -65kJ.mol$^{-1}$ [ZHAO 2000].

Les compositions 66Si34Hf, 75Si25Hf (%at) et le composé stoechiométrique HfSi$_2$ ont été comparés. La composition 66Si34Hf a été préparée à partir de poudres d'hafnium et de silicium. La composition 75Si25Hf a été préparée avec les poudres de HfSi$_2$ et de Si. L'infiltration a eu lieu pendant 5 minutes à 1700°C.

Les Figures 19, 20, et 21 présentent l'infiltration réalisée sur les trois échantillons M4, A, et M5. La répartition d'hafnium au sein de l'échantillon A (Figure 20) semble la plus homogène. Les mélanges M4 et M5 présentent comme les trois échantillons étudiés précédemment une grande disparité dans la répartition de l'hafnium dans la préforme carbone.

Ainsi l'utilisation de mélange de poudres, dans les proportions des alliages, non homogénéisées par prétraitement thermique entraîne une hétérogénéité importante des éléments infiltrés dans la préforme carbone.

Les trois échantillons ont à 5 $\mu$m près la même profondeur maximale d'infiltration de 290 $\mu$m. Cette profondeur maximale a doublé par rapport aux échantillons de la partie précédente grâce au forage effectué sur les pastilles pour contenir l'étalement du métal. Les trois profondeurs étant similaires, ce ne sont pas les alliages utilisés ici qui limitent l'infiltration.

Si le composé HfSi$_2$ est intéressant pour l'homogénéisation de l'infiltration, il permet également de maximiser la proportion d'hafnium du réactif infiltrant à 33 %, tout en ayant une température de fusion unique de seulement 1543°C, alors que la température de liquidus selon les diagrammes de phase Hf-Si (Figure 8) de l'alliage équivalent 66Si34Hf (% at.) est comprise entre 1710°C et 2080°C.

Le composé stoechiométrique HfSi$_2$ est donc le composé sous forme de poudre compactée le plus approprié pour réaliser l'infiltration réactive en phase liquide.

**2.3. Résultats des RMI d'HfSi$_2$ sur pastilles de graphite.**

a) Echantillon A : HfSi$_2$ sur pastille de graphite 2175 à 1800°C pendant 5 minutes.

La Figure 22 présente une vue globale de l'infiltration de l'échantillon A. La profondeur maximale d'infiltration est 295 $\mu$m. L'hafnium s'est infiltré moins profondément que le silicium : la majeure partie des éléments lourds visibles se situe entre 0 et 160 $\mu$m de profondeur. Du métal résiduel biphasé est visible à la surface de l'échantillon, une analyse EDXS a permis de déterminer que la phase claire comprenait environ 55% at ; de Si et 45% at. d'hafnium, ce qui est proche du composé stoechiométrique HfSi. La phase sombre est composée à 95% at. de silicium et 5% at. d'hafnium. Des phases anguleuses sont visibles à la surface de la pastille : une couche régulière à l'interface carbone/métal, ainsi que des petits cristaux incrustés dans le métal résiduel. Une analyse EDXS a mis en évidence qu'il s'agissait de grains de HfC. Deux phases sont visibles dans les pores infiltrés de la pastille : une phase claire et une phase grise. Les phases claires correspondent à des carbures HfC, les phases grises à des carbures SiC. Aucune phase métallique résiduelle n'est observable dans la pastille.

La Figure 23 présente le front d'infiltration de l'échantillon A. Des pores non infiltrés sont visibles en bas de la micrographie alors que des pores comblés par des carbures sont visibles sur le haut. La plupart des pores infiltrés sont ici recouverts ou comblés par du carbure SiC.

Afin d'observer plus en détail la morphologie et la microstructure des éléments produits lors de l'infiltration réactive, un polissage ionique a été effectué sur l'échantillon A.

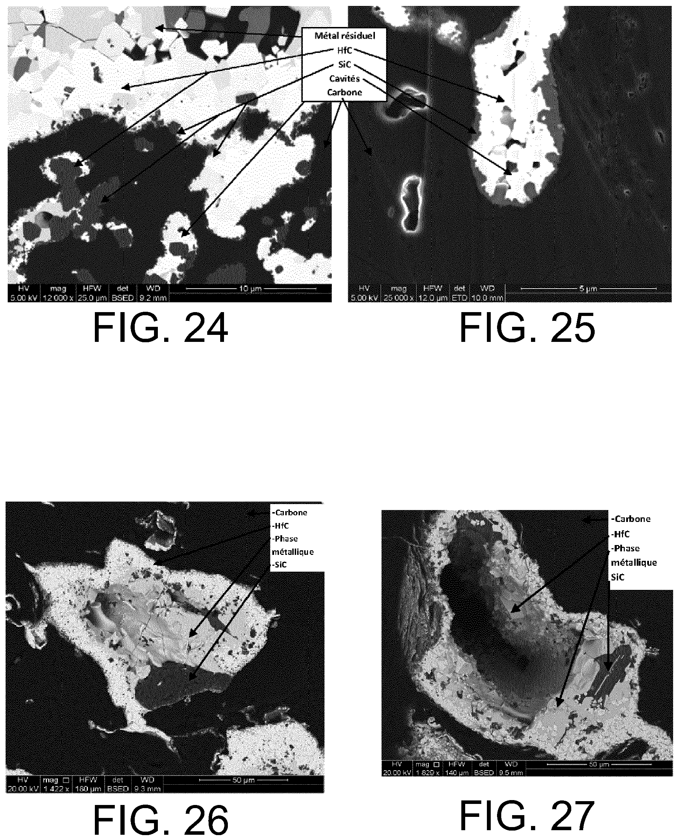

La Figure 24 présente l'interface d'infiltration de l'échantillon A poli ioniquement. La couche à la surface de la pastille précédemment décrite est visible : elle est régulière, d'une épaisseur comprise entre 6 et 10 $\mu$m, et composée de carbure HfC. Cette couche de carbure est présente sur toute la surface d'infiltration, entre la préforme et le métal résiduel. Les pores proches de la surface sont presque entièrement comblés, par des carbures SiC et HfC. Les carbures sont adhérents avec le carbone : aucune séparation n'est visible. Les grains des carbures HfC ont une taille généralement comprise entre 0,5 et 5 $\mu$m. Au sein de l'infiltration, les grains des carbures SiC ont une taille variant entre 1 et 15 $\mu$m. Certains pores visibles présentent des cavités résiduelles dont le diamètre n'excède pas 500 nm.

L'observation attentive des limites entre le carbone et les carbures HfC, sur la Figure 24, montre la présence d'une couche de SiC séparant le carbone des carbures HfC. Cette couche de SiC, d'une épaisseur comprise entre 50nm et 500nm est présente au niveau de toutes les interfaces Carbone/HfC, que ce soit en surface de la préforme ou au sein de la zone infiltrée, comme le montre la Figure 25.

b) Echantillon B : HfSi$_2$ sur pastille de graphite 6103 à 1600°C pendant 15 minutes.

La Figure 26 présente un pore de l'échantillon B d'une largeur moyenne de 60 $\mu$m. Une phase grumeleuse est visible sur toute la périphérie du pore : c'est une couche de carbure d'une épaisseur de 10 $\mu$m.

Une analyse EDXS a permis d'identifier ces carbures comme étant HfC pour les grains blancs et SiC pour les grains gris. Une couche de SiC, d'une épaisseur comprise entre 50nm et 500nm, est présente à l'interface entre le carbone et les carbures HfC. Une phase métallique riche en hafnium nappe la couche de carbure précédemment décrite. L'analyse EDXS indique que cette phase est constituée environ de 55% at. de silicium, de 42% at. d'hafnium et de 3% at. de carbone. Ainsi du carbone dissout est présent dans la phase métallique qui est très proche du composé stoechiométrique HfSi. Ce composé est selon le diagramme ternaire C-Hf-Si à 1300°C à l'équilibre avec HfC et HfSi$_2$. La température de 1600°C ne paraît donc pas suffisante pour éviter la présence de phases métalliques résiduelles dans les pastilles 6103.

c) Echantillon C : HfSi$_2$ sur pastille de graphite 6103 à 1800°C pendant 2 minutes.

La Figure 27 présente un pore similaire à celui présenté pour l'échantillon B, Figure 26. Les phases observées sont les mêmes : des carbures HfC et SiC, ainsi qu'une phase métallique. Toutefois cette dernière est nettement moins importante, alors que les carbures ont une taille plus grande. Une couche de SiC est présente entre les carbures HfC et le carbone, de plus les carbures ne présentent aucune décohésion avec le carbone.

d) Echantillon D : HfSi$_2$ sur pastille de graphite 6103 à 1800°C pendant 15 minutes.

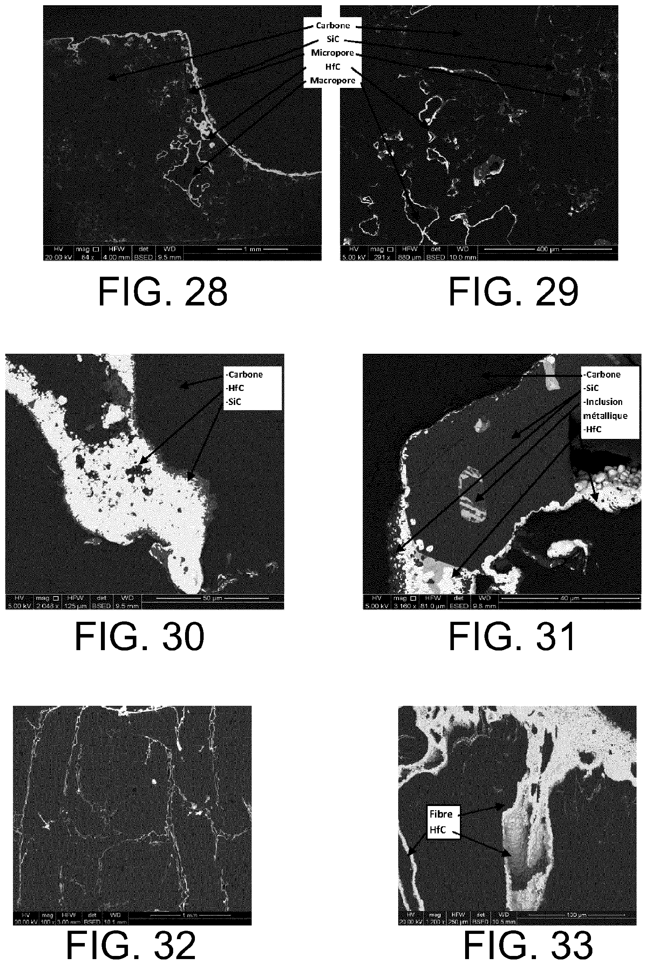

La Figure 28 présente une vue globale de l'infiltration de l'échantillon D. Les pastilles 6103 présentent des pores de taille micro et macroscopique. La surface de l'échantillon est recouverte d'une couche régulière de carbure HfC, dont l'épaisseur moyenne est de 20 $\mu$m. De même, les macropores (dont le diamètre moyen est supérieur à 60$\mu$m) à proximité de la surface sont ici comblés en grande partie par la formation de nombreux carbures HfC. Les macropores présents plus en profondeur ne sont pas comblés par des carbures, mais seulement recouvert d'une couche de carbures HfC dont l'épaisseur moyenne est 15 μm.

La Figure 29 présente une vue plus détaillée de l'infiltration au sein de l'échantillon D. Une différence de comportement selon la taille des pores est discernable. En effet les micropores et microcanaux d'infiltration sont majoritairement comblés de SiC, alors que les carbures HfC se situent majoritairement sur les pores de grand diamètre.

La Figure 30 présente un pore d'une largeur moyenne de 60 μm. Des carbures SiC sont visibles sur la périphérie de ce pore. Le centre de la porosité est ensuite comblé par des carbures HfC. Des cavités résiduelles sont visibles entre les grains des carbures HfC, mais aucune phase métallique résiduelle n'est présente.

La Figure 31 contraste avec la précédente et présente, dans un pore ayant la même morphologie que celui de la précédente figure, une inclusion de métal comprise dans un carbure SiC. Cette inclusion est constituée de 3 phases : 60% d'une phase sombre qui est composé environ de 97% at. de Si et 3% at. d'Hf, 30% d'une phase claire composée environ de 45% at. d'hafnium, 50% at. de silicium et 5% at. de C, et 10% d'une phase grise intermédiaire constituée de 88% at. de Si, 8% at. de Hf et 4% at. de C.

L'étude du diagramme ternaire C-Hf-Si à 1800°C révèle que la phase métallique claire est à l'équilibre avec les carbures HfC et SiC à cette température. Toutefois elle n'est pas à l'équilibre lors du refroidissement, comme le montre le diagramme ternaire à 1300°C (Figure 9). La composition des phases a été analysée par EDXS.

Sur tout l'échantillon D, une couche de SiC est observée à l'interface entre le carbone et HfC.

### 2.4. Résultats des RMI d'HfSi$_2$ sur des Matériaux Carbone/Carbone.

L'objectif de cette étude étant la réalisation de carbures ultraréfractaires par RMI au sein de matériaux carbone/carbone, des infiltrations réactives sur ces matériaux ont été réalisées avec HfSi$_2$ à 1800°C.

a) Echantillon E : HfSi$_2$ sur composite C/C 2D à 1800°C pendant 5 minutes.

Les premières infiltrations sur composites C/C ont eu lieu sur des préformes 2D. Elles ont été réalisées avec HfSi$_2$ pendant 5 minutes à 1800°C.

La Figure 32 met en évidence l'infiltration d'HfSi$_2$ au sein d'un composite 2D. L'échantillon a été imprégné sur toute sa hauteur (5 mm) lors de la RMI, et il ne reste aucun métal résiduel à la surface des pastilles. Une couche de carbure HfC d'une épaisseur de 10 à 15 μm nappe les macrocanaux d'infiltration et la surface de la préforme. Une certaine hétérogénéité horizontale de l'imprégnation est observable : certains canaux ou certaines porosités semblent avoir été mouillés par moins de liquide que d'autres. Les carbures HfC sont majoritairement concentrés dans la moitié haute de l'infiltration. Aucune phase métallique n'est observable.

La Figure 33 montre que les fibres de carbone accessibles sont entièrement recouvertes d'une couche régulière de carbure HfC. Les grains d'HfC constituant cette couche ont une taille comprise entre 1 et 5 μm. La macroporosité à la surface de la zone visible sur cette figure est comblée d'une couche de 50 μm de carbure HfC ayant germé à la surface. Le carbone consommé pour former les carbures provient de la couche de graphite déposée à la surface des fibres durant la graphitation, ces dernières apparaissent intactes et devraient conserver leurs propriétés mécaniques. De même, les carbures sont cohérents avec le carbone : ni retrait, ni décohésion des carbures par rapport au carbone n'ont été observés dans l'échantillon.

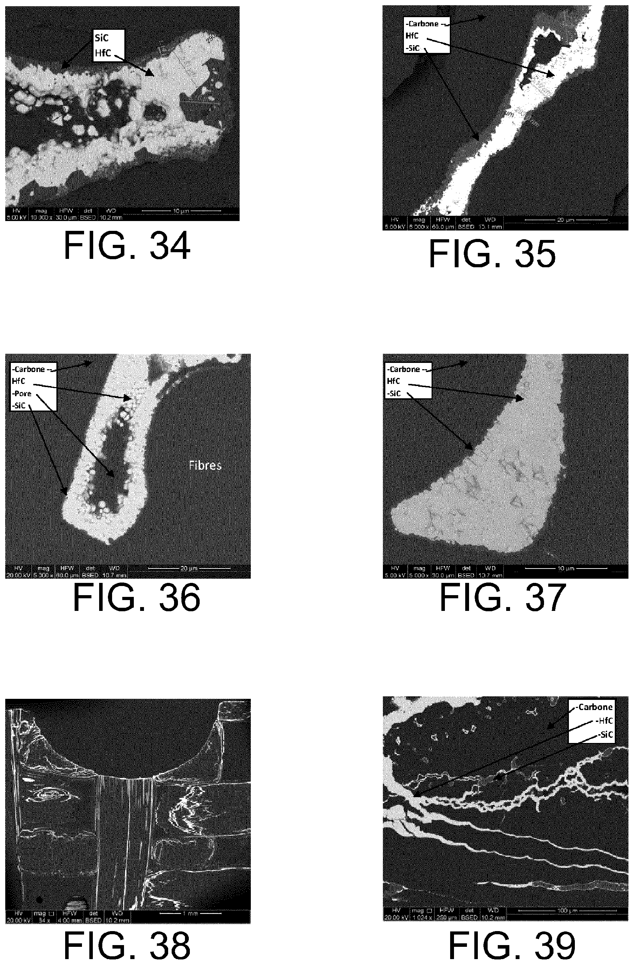

La Figure 34 présente un pore inter-fibres de l'échantillon E. On distingue nettement une couche de SiC présente entre le carbone et les carbures HfC, celle-ci est présente dans tout l'échantillon et a une épaisseur comprise entre 50 nm et 750 nm.

La Figure 35 présente des canaux d'infiltration entre les feuillets de graphite de l'échantillon E. Le rapport de la proportion de carbures SiC par rapport à HfC semble dépendre du diamètre des canaux et pores d'infiltration. Ainsi sur cette figure, le petit canal, situé dans la partie haute, présente un rapport SiC/HfC plus important que le bras d'infiltration en dessous qui est plus large.

La Figure 36 présente un pore inter-fibres dont la largeur maximale est 15 μm et le diamètre d'entrée 10 μm, ce qui est relativement important. Le pore est comblé de carbures HfC, et une couche de SiC est présente à l'interface entre le carbone et HfC. Une cavité résiduelle au centre du pore est visible, alors que l'entrée de ce pore est obstruée de carbures HfC.

La Figure 37 présente un pore d'une taille quasi similaire au précédent : la largeur maximale est de 15 μm, toutefois le diamètre d'entrée du pore est de seulement 5 μm. Les phases visibles sont les mêmes que pour la figure précédente cependant aucune cavité résiduelle n'est présente dans ce pore entièrement comblé. Il semble ainsi que le diamètre d'entrée du pore a une influence sur la présence de cavités résiduelles.

b) Echantillon F : HfSi$_2$ sur composite C/C 3D à 1800°C pendant 15 minutes

L'infiltration réactive en phase liquide de HfSi$_2$ au sein de préforme C/C 2D étant efficace, des RMIs ont été réalisées sur des composites C/C 3D

La Figure 38 présente une vue globale de l'imprégnation. Le liquide a mouillé de nombreuses surfaces. L'infiltration a eu lieu non seulement verticalement mais aussi horizontalement, par capillarité. La répartition horizontale du liquide semble homogène entre tous les canaux d'infiltration, contrairement à l'échantillon E. Il ne reste aucun métal résiduel à la surface de la préforme, de plus, aucune phase métallique résiduelle n'a été observée dans les porosités de cet échantillon.

La Figure 39 montre que la phase liquide a mouillé non seulement les porosités inter-fils mais aussi de nombreuses porosités inter-fibres. Les macroporosités sont comblées majoritairement par des carbures HfC. Certaines surfaces de carbones sont recouvertes d'un multicouche SiC/HfC/SiC.

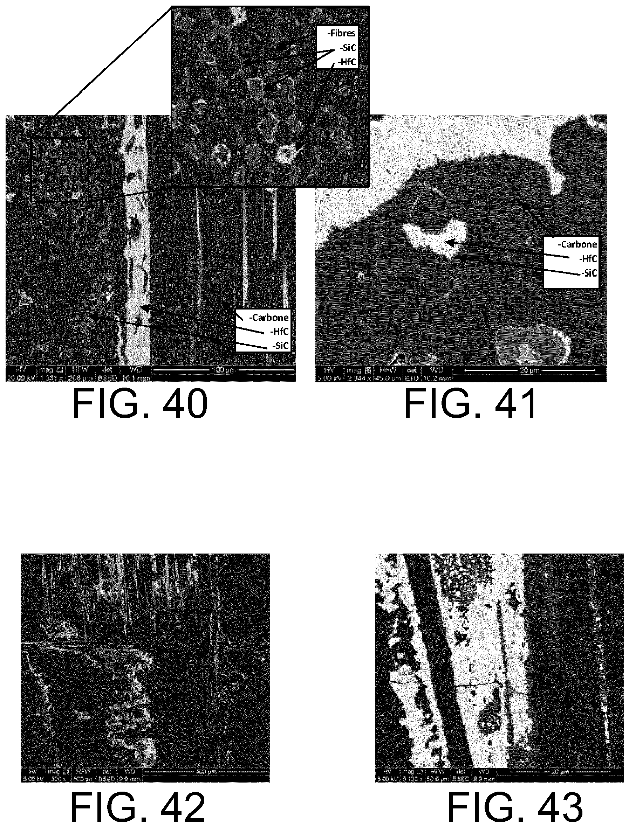

La Figure 40 confirme que l'infiltration a eu lieu non seulement entre les mèches formant le composite C/C mais aussi entre les fibres formant ces mèches. En effet, les espaces recouverts de carbures sont principalement les porosités inter-fils, toutefois des canaux entre les fibres et entre les feuillets de graphite sont parfois infiltrés et comblés de carbures. Cette figure met aussi en évidence un comportement observé dans tout l'échantillon : les petits pores et microcanaux d'infiltration sont majoritairement comblés de SiC, alors que les carbures HfC se situent majoritairement sur les pores de grand diamètre, dont les porosités inter-fils.

La Figure 41 montre la présence d'une couche de SiC entre le carbone et HfC, cette couche régulière d'une épaisseur comprise entre 50 nm et 1 $\mu$m est présente sur tout l'échantillon. Cette figure, ainsi que la Figure 39 met en évidence le fait que les carbures sont adhérents avec les fibres : il n'y a aucun vide entre les grains de carbures et le carbone.

c) Echantillon G : HfSi$_2$ via barbotine sur composite C/C 3D à 1800°C pendant 15 minutes

Une solution pour homogénéiser et augmenter la quantité de métal infiltré dans la préforme est l'utilisation d'une barbotine : la préforme est infiltrée sous vide et à froid par une barbotine constituée de la poudre d'HfSi$_2$ et d'éthanol (30 % en volume d'éthanol). Une fois l'éthanol évaporé, la poudre est contenue dans la préforme et le traitement thermique a lieu : 15 minutes à 1800°C en utilisant le banc de mouillage HT.

La Figure 42 montre que l'infiltration en ayant utilisé une barbotine permet de mouiller aussi bien les porosités inter-fils que celles inter-fibres. L'hafnium semble s'être infiltré de façon plus conséquente dans les micropores que pour échantillons précédents, ainsi l'utilisation d'une barbotine réduit la dépendance du rapport SiC/HfC en fonction du diamètre des pores. L'infiltration a bien eu lieu sur toute la préforme.

La Figure 43 montre la présence de SiC entre le carbone et HfC. Cette couche est visible sur tout l'échantillon. Le diamètre des pores semble tout de même toujours influer sur le type de carbures comblant ces derniers.

L'utilisation de barbotine en laboratoire est donc intéressante et permet d'homogénéiser l'infiltration à l'extérieur du substrat: l'alliage étant déjà dans la préforme les surfaces initiales de réaction sont beaucoup plus grandes.

d) Echantillon H : HfSi$_2$ sur C/C 3D à 1800°C pendant 15 minutes puis Si à 1600°C pendant 5 minutes.

L'utilisation de HfSi$_2$ pour l'infiltration réactive en phase liquide de matériaux C/C permet de former de nombreux carbures HfC et SiC sans la formation de phase métallique résiduelle. Toutefois, certains macropores sont encore accessibles et peuvent être infiltrés une nouvelle fois. Afin de couvrir ces macropores avec du carbure de silicium pour assurer et amplifier la quantité de céramique, une seconde infiltration réactive peut être réalisée avec du silicium.

La Figure 44 illustre l'infiltration réalisée au sein de l'échantillon H. Le liquide a correctement mouillé les porosités inter-fibres, et de nombreux carbures SiC sont visibles avec quelques inclusions de HfC. Les grains des carbures SiC ont une taille comprise entre 1 et 10 $\mu$m, alors que la taille des grains de HfC est comprise entre 0,5 et 3 $\mu$m.

La Figure 45 présente une infiltration inter-fils et inter-fibres. Le rapport SiC/HfC dépend de la taille des porosités. En effet, les macro-canaux d'infiltration inter-fils ont un rapport SiC/HfC beaucoup plus faible que les micro-canaux d'infiltration inter-fibres.

La Figure 46 montre que la seconde passe au silicium complète les macroporosités avec des nouveaux carbures de silicium. Les carbures d'HfC semblent moins concentrés sur la partie supérieure de la préforme, et leur étalement paraît plus régulier.

Dans tout l'échantillon, aucune phase métallique n'est observée et la cohésion des carbures avec le carbone semble encore plus forte que précédemment (grâce à l'étalement des carbures HfC).

e) Echantillon I : HfSi$_2$ sur C/C 3D à 1800°C pendant 15 minutes, Pyrolyse au brai, Si à 1600°C pendant 5 minutes.

Afin de réaliser un nouveau multicouche, une étape de pyrolyse au brai dans l'autoclave présenté plus haut a été réalisée entre les deux passes de RMI.

La Figure 47 présente l'infiltration au sein de l'échantillon I. Toute la périphérie des fils de fibres, ainsi que des macroporosités entre les fils est recouverte d'une couche régulière de carbures. Certaines porosités inter-fibres ont été infiltrées. La répartition des carbures HfC est régulière, aussi bien horizontalement que verticalement.

La Figure 48 montre la structure multicouche qui s'est déposée dans les espaces inter-fils et inter-fibres. En effet, une couche de SiC est présente à l'interface entre le carbone et HfC dans tout l'échantillon. Cette couche a une épaisseur comprise entre 50 nm et 1 $\mu$m. Le rapport SiC/HfC dépend du diamètre des pores : les micropores inter-fibres sont majoritairement comblés de SiC, alors que les macroporosités sont majoritairement comblés de HfC.

Les Figures 49 et 50 mettent en évidence que la couche de PyC s'est correctement déposée, durant la pyrolyse au brai, dans les macropores du composite C/C. Le silicium a bien réagi avec et forme des carbures SiC tout autour de ce dépôt de pyrocarbone (PyC). Les grains de ces nouveaux carbures ont une taille comprises entre 2 et 8 $\mu$m. Des inclusions de carbures HfC sont visibles sur le dépôt de PyC. La seconde passe n'ayant été réalisée qu'avec du silicium, ces carbures HfC ont dû être déplacés durant la seconde RMI par le flux de silicium, et disséminés dans l'échantillon. Aucune phase métallique n'est observée dans cet échantillon, les carbures observés sont tous cohérents avec le carbone.

### Conclusions.

Au regard des exemples qui précédent, on se livre dans ce qui suit à une discussion détaillée sur l'influence des paramètres temps et températures dans le procédé selon l'invention, sur l'importance de la morphologie du substrat (préforme) dans le procédé selon l'invention. On expose aussi une approche cinétique/thermodynamique qui explique la formation en multicouche du dépôt.

Cette discussion et cet exposé ne sont cependant en aucune manière limités aux exemples particuliers mais contiennent des enseignements s'appliquant de manière générale au procédé selon l'invention et non seulement à des modes de réalisation particuliers et spécifiques de celui-ci.

L'étude de l'infiltration réactive en phase liquide de matériaux carbonés utilisant le système binaire Hf-Si, réalisée dans les exemples présentés plus haut, a permis de déterminer qu'HfSi$_2$ était le composé intermétallique le plus approprié pour réaliser la RMI à partir de mélange de poudres métalliques, compactées, à des températures inférieures ou égales à 1800°C.

L'utilisation du disiliciure d'hafnium permet en effet non seulement une équi-répartition, de l'hafnium, sur la largeur de l'infiltration, mais aussi d'avoir un composé avec une température de fusion unique, ce qui évite une infiltration prématurée du silicium dans la préforme.

L'étude des échantillons A à I a mis en évidence différents éléments.

Tous les carbures formés dans les échantillons sont cohésifs avec le graphite ou les fibres de carbone.

En effet, aucun espace entre le carbone et les carbures formés n'a été observé, même après les polissages ioniques réalisés entre autres pour l'échantillon A.

La fine couche de SiC présente sur toute l'interface entre le carbone et les carbures d'hafnium doit être responsable de cette cohésion entre le carbone et le revêtement multicouche de carbures.

Les échantillons H et I ont montré qu'une seconde RMI réalisée avec du silicium permettait de répartir plus régulièrement les carbures HfC dans l'échantillon.

Cela signifie que le flux de silicium liquide s'infiltrant dans la préforme emporte certains carbures HfC comblant les macropores du haut de l'échantillon vers le bas de l'échantillon. Ces carbures « mobiles » HfC sont généralement dispersés dans les macropores au-dessus d'une couche de HfC fixe qui est en contact avec le SiC. Ce phénomène tend à confirmer que c'est bien le carbure de silicium qui apporte la cohésion entre les carbures HfC et le carbone.

La RMI d'HfSi$_2$ à 1800°C pendant 5 minutes semble parfaitement adaptée pour les composites C/C 2D si le volume de métal d'infiltration disposé à la surface est égal à environ 20% du volume de porosité dans la préforme.

De même l'infiltration réactive en phase liquide de HfSi$_2$ à 1800°C pendant 15 minutes de préformes C/C 3D est efficace et mène au dépôt bicouche de SiC/HfC en une seule étape.

La formation de phases métalliques résiduelles est évitée en limitant la quantité de métal infiltrée.

Ce dépôt a lieu aussi bien dans les porosités inter-fils qu'inter-fibres. Toutefois, on remarque que les espaces inter-fibres sont majoritairement comblés de carbures SiC alors que les macroporosités présentent une concentration importante de HfC.

Les exemples qui précédent montrent que les principaux paramètres régissant la porosité après réaction de la préforme, et les phases résiduelles sont la température, le temps de réaction et la morphologie de la préforme telle que définie par la taille des pores et la porosité initiale de cette préforme.

### Influence des paramètres température et temps.

Les infiltrations réactives en phase liquide décrites dans les exemples ci-dessus ont été effectuées avec des paramètres temps et température définis arbitrairement. On présente maintenant l'influence de la variation des paramètres température et temps sur les phases formées au sein des préformes.

Le but est de minimiser le temps de réaction et la quantité de phases métalliques résiduelles dans la préforme tout en respectant les limites matérielles.

Dans cette étude, le banc de mouillage haute-température est équipé d'un four inductif haute fréquence et de forte puissance, il est donc plus prudent de ne pas l'utiliser plus de 15 minutes à température maximale.

Les résultats des échantillons B à D permettent de discuter l'influence des paramètres température et temps sur les phases métalliques résiduelles dans les pores des pastilles de graphite 6103.

Les figures correspondant à ces échantillons présentent des pores de tailles similaires avec une largeur maximale d'environ 60 $\mu$m.

L'échantillon B issu d'une infiltration à 1600°C pendant 15 minutes contient une proportion plus importante de phase métallique HfSi dans la préforme que l'échantillon C issu d'une RMI de 2 minutes à 1800°C. La température a donc un effet direct sur les phases résiduelles.

L'échantillon D a mis en évidence qu'un temps de traitement plus long favorisait la carburation totale des phases présentes dans ces pores.

Les phases formées pendant la RMI avec HfSi$_2$ dépendent donc directement des paramètres de température et de temps utilisés. Plus la température est grande, plus la quantité de métal résiduel sera infime et la quantité de carbure importante. De la même façon, plus le temps de palier à une même température est long, plus la quantité de carbure, produite dans les macropores aux dépens des phases métalliques, sera grande.

La température agit non seulement directement sur les valeurs d'enthalpie libres des carbures et des siliciures et donc sur les différentes enthalpies libres de réaction, mais elle agit aussi sur les coefficients de diffusion des éléments. En effet, à 1800°C, le coefficient de diffusion du carbone dans le SiC et dans l'HfC est plus élevé qu'à 1600°C. Le carbone diffusant plus dans les carbures, une quantité plus importante de phase métallique peut réagir pour carburer.

Les paramètres de température et de durée de palier optimums pour l'infiltration réactive de HfSi$_2$ en phase liquide dans les conditions préférées, à savoir sous flux d'argon, avec un volume de métal égal à 20 à 30% du volume de vide dans l'échantillon, au sein de pastilles 6103 sont 1800°C pendant 15 minutes.

Les différentes infiltrations réalisées ont mis en évidence l'absence de phase métallique résiduelle dans les préformes C/C 2D pour un temps de traitement de 5 minutes à 1800°C. Pourtant, les matériaux Carbone/Carbone utilisés présentent une dispersion dans la taille des pores similaire à celle des pastilles 6103. Ce comportement signifie que la morphologie de la préforme influe directement sur les phases formées.

**Influence de la morphologie de la préforme.**

L'échantillon A met en évidence qu'une taille des pores régulière et comprise entre 1 et 30 $\mu$m peut limiter la quantité de liquide infiltré dans la préforme. En effet, les pores proches de la surface d'infiltration sont tous comblés par des carbures, alors que les pores situés plus en profondeur n'ont pas été mouillés par le liquide. Ainsi ce qui a limité l'infiltration de métal dans la préforme graphite n'est pas un manque de métal initial au-dessus de l'échantillon mais la taille des pores. En effet, lorsque l'infiltration réactive a lieu, il y a une compétition entre le mouillage du liquide dans la préforme carbonée et la formation de carbure. Lorsque les carbures sont formés en surface, ils comblent les voies d'infiltration si elles sont d'un diamètre faible qui limite donc la quantité de matière introduite dans la préforme. Ainsi les infiltrations réalisées avec les pastilles 2175 sont limitées par la petite taille des pores et la faible porosité initiale de celles-ci. Néanmoins le faible diamètre des pores permet la réaction totale de l'alliage infiltré avec le carbone, d'où l'absence de phases métalliques résiduelles sur ces pastilles.

Les différentes expériences menées sur les pastilles 6103 ont permis de déterminer que le diamètre des pores critiques pour éviter la formation de phase métallique résiduelle avec un traitement de 15 minutes à 1800°C était 50 $\mu$m. Au-delà de cette valeur, deux cas sont possibles : soit le pore n'est pas obstrué et seule une multicouche de carbures s'est déposée sur le carbone, soit le pore est obstrué et la probabilité de présence de deux phases métalliques résiduelles, l'une riche en silicium et l'autre proche de HfSi, est grande. Cette remarque n'est valable que pour les pastilles 6103.

Les résultats des échantillons E et F montrent que l'infiltration par HfSi$_2$ des préformes C/C est très efficace. L'infiltration de ces matériaux est limitée par la quantité d'HfSi$_2$ initiale : l'échantillon présentant des macroporosités, le liquide infiltre et mouille la préforme en suivant non seulement des chemins de porosité verticaux mais aussi horizontaux. Il ne reste, en conséquence, ni métal résiduel à a surface, ni de phase métallique résiduelle dans les macropores. Plus la surface d'infiltration est homogène, moins elle présente de carbures HfC en surface ou concentrés sur la partie supérieure de la préforme. Ainsi, dans les composites C/C 3D : l'alliage est « absorbé » par capillarité dans tous les canaux en raison des 3 directions orthogonales d'infiltration, alors que la préforme 2D « oblige » la phase liquide à suivre seulement 2 directions, ce qui concentre une partie du liquide dans certains macro-canaux et forme des agrégats de grains de HfC.

Toutes les infiltrations réalisées mettent en évidence que le rapport SiC/HfC dépend du diamètre des pores. Cette dépendance peut s'expliquer en considérant la fluidité des phases liquides infiltrant les préformes. Une phase riche en hafnium a une température de fusion beaucoup plus élevée qu'une phase pauvre en hafnium, sa viscosité à 1800°C est alors plus grande. Or pour infiltrer des petits canaux, la phase avantagée est celle présentant la viscosité la plus faible, donc le plus de silicium. Ainsi le gradient de viscosité des phases métalliques lors de l'infiltration engendre une présence plus importante de SiC que de HfC dans les micropores et microcanaux; et inversement, une concentration plus importante de HfC au niveau des grandes porosités. Ce comportement signifie, pour les matériaux C/C, que la plupart des espaces inter-fibres sont comblés avec un rapport SiC/HfC supérieur à 5, alors que les espaces inter-fils présentent un rapport SiC/HfC inférieur à 0,2.

La présence de cavité résiduelle dans les pores carburés, a été mise en évidence par plusieurs auteurs dans le cadre de la siliciuration. Ces cavités au sein des petits pores sont attribuées à la présence d'espèces gazeuses dans du matériau lors de l'infiltration par la phase liquide.

La présence de cavités résiduelles dans certains pores infiltrés peut s'expliquer par deux phénomènes comme cela est expliqué dans le document de [QUET 2007].

Premier phénomène : les gaz sont piégés par une vitesse d'imprégnation trop rapide des pores. Le liquide migre plus rapidement par les parois du pore que par le centre. Les gaz présents sont emprisonnés par l'obstruction prématurée de l'extrémité opposée à celle de l'entrée du métal liquide et/ou par l'obstruction de l'entrée.

Second phénomène : le diamètre d'entrée des pores joue également un rôle dans la densification par un métal liquide. Une diminution de la taille des pores induit un débit volumique de métal liquide plus faible. L'obstruction des extrémités est par conséquent plus lente. Ainsi un diamètre d'entrée plus faible permet de ralentir la vitesse de pénétration de la phase liquide dans la porosité et améliore la densification des pores. Ceci peut justifier les différences observées dans le remplissage partiel ou total des pores.

L'étude des RMI réalisées sur les pastilles de graphite a mis en évidence que si les pores ont un diamètre réduit, par exemple entre 1 et 20 $\mu$m, la carburation des pores en surface peut limiter l'infiltration en obstruant les pores. Dans un même temps aussi bien pour les pastilles de graphite que pour les composites C/C, les pores ayant un diamètre moyen trop important, par exemple supérieur à 50 $\mu$m, ont deux comportements différents : s'ils sont près de la surface d'infiltration, ces pores présentent une couche épaisse de carbures SiC et HfC, mais peuvent aussi contenir au centre des phases métalliques résiduelles, riches en silicium ou proches de HfSi. S'ils sont au coeur de la préforme, les macropores sont simplement recouverts d'une bicouche de carbure SiC/HfC d'une épaisseur par exemple de 50 à 500 nm pour le SiC et jusqu'à 15 $\mu$m par exemple pour le carbure HfC.

La différence de fluidité des phases métalliques engendre une dépendance du rapport SiC/HfC dans les canaux ou pores selon le diamètre de ces derniers. Les phases riches en silicium étant plus fluides que celles comprenant une grande partie d'hafnium, le carbure de silicium est quasiment majoritaire dans tous les pores ou canaux d'infiltration dont le diamètre est par exemple inférieur à 5 $\mu$m.

Certains pores, infiltrés et de petit diamètre, présentent des cavités résiduelles. Ces cavités sont dues à une vitesse d'infiltration du liquide dans le pore trop rapide. Le diamètre d'entrée du pore joue un rôle primordial dans la régulation du débit volumique de métal liquide. Si le diamètre d'entrée est grand, la probabilité d'avoir une cavité résiduelle augmente.

La présence de cavité résiduelle dans les micropores n'est pas souhaitée, car elle est source de point de concentration de contrainte. Pour éliminer les cavités résiduelles, il faut ralentir la vitesse d'imprégnation de la préforme par le liquide, pour laisser les espèces gazeuses s'échapper des pores avant l'obstruction des entrées de celui-ci.

**Formation des microstructures observées**

**Présence ou absence de phases métalliques résiduelles**

Les parties précédentes ont permis de présenter l'influence des différents paramètres sur les phases finales après l'infiltration réactive. L'absence de phases métalliques résiduelles dans les pores des échantillons après des traitements thermiques adaptés peut être expliquée grâce au diagramme ternaire présenté sur la Figure 51.

La préforme est entièrement en carbone, la quantité d'alliage initiale est limitée à 12 mm$^3$, le mélange est donc majoritaire en carbone. Il se situe environ au niveau de la croix représentée sur le diagramme ternaire ci-dessus. Cette dernière est dans le triangle C-HfC-SiC, ce qui signifie que les phases finales une fois l'infiltration réactive finie à 1800°C doivent être HfC, SiC et C. Ce sont bien les phases observées. Au cours de la carburation, la quantité de carbone diminue, et le mélange évolue dans la direction de la flèche présente sur le diagramme. Toutefois le carbone diffuse à travers les carbures et atteint toujours le liquide pour continuer la formation de carbure. L'absence de phase métallique résiduelle dans la plupart des échantillons s'explique par la constitution du mélange qui est largement majoritaire en carbone. Cela est dû au volume de métal disposé sur la préforme équivalent à 25% du volume de vide dans cette dernière, et à la petite taille des pores ce qui engendre pour une même porosité ouverte une surface de réaction plus importante.

Lorsque la taille des pores est grande : par exemple supérieure à 50 $\mu$m pour un traitement de 1800°C pendant 15 minutes, le centre du pore est déficitaire en carbone (il faut que le carbone diffuse jusqu'au centre du pore), ainsi certaines phases métalliques peuvent restées dans le pore, si elles ne mouillent pas d'autres surfaces de carbone. Ces phases métalliques ont à 1800°C les compositions présentées à l'équilibre avec les carbures sur le diagramme ternaire.

**Formation de la microstructure en multicouche**

Le tableau ci-dessous présente les enthalpies libres à 1827°C des différentes phases du système. D'un point de vue thermodynamique, le carbure HfC est la phase la plus stable avec le carbone. L'enthalpie libre de HfC étant deux fois « plus négative » que celle du SiC, il doit se former à l'interface contre le carbone.

**Enthalpies libres des phases à 1827°C calculées par Thermocalc.**

| | $Liq(HfSi_2)$ | $HfSi_{(s)}$ | $C_{(s)}$ | $Hf_{(s)}$ | $Si_{(l)}$ | $HfC_{(s)}$ | $SiC_{(s)}$ |
|---|---|---|---|---|---|---|---|
| G (kJ) | -164,6 | -195,2 | -50,1 | -158,7 | -107,3 | **-399,1** | **-200,1** |
| NB : Les valeurs ainsi que le diagramme ternaire, ont été calculés par ThermoCalc à partir d'une base de données thermodynamiques réalisée à partir des documents [BITT 1997; BAND 2004; ZHAO 2000] ; $Liq(HfSi_2)$ correspond au liquide de composition équivalente $HfSi_2$. | | | | | | | |

Or le polissage ionique effectué sur l'échantillon A a mis en évidence la présence d'une couche de SiC entre le carbone et les carbures HfC sur toutes les surfaces de l'échantillon. Cette couche de SiC à l'interface carbone/HfC est visible dans et sur tous les échantillons : M1 à M5, et A à I. Le mécanisme de formation des carbures dans les composites C/C est donc le même que celui dans les pastilles graphites et mène aussi à une microstructure en multicouche SiC/HfC au contact du carbone. La Figure 52 présente un schéma simplifié de la microstructure observée avec du métal ou du vide (521), du HfC (522), du SiC (523), du SiC et/ou un pore (524) et du carbone (525)

Cette présence de SiC entre le carbone et les carbures HfC, n'est pas cohérente avec les valeurs des enthalpies libres des phases présentées précédemment.

Lorsque la température atteint 1543°C, $HfSi_2$ fond à l'instant t. Il se décompose alors en HfSi et un liquide qui, à l'instant t+ε, aura une composition atomique de 20 à 30% d'hafnium. Ainsi le « premier liquide » au contact et mouillant le carbone comprend de 20 à 30% d'hafnium. En conséquence, la formation de cette couche de SiC ne peut être imputée à l'infiltration prématurée d'un liquide ne comprenant que du silicium.

Afin d'expliquer le mécanisme de formation de ce multicouche au contact du carbone, les enthalpies libres des réactions possibles dans le système ont été calculées via les valeurs du tableau ci-dessus.

Pour la réaction [1]

$$Liq(HfS_2) + 3\ C \rightarrow HfC + 2\ SiC,$$

on a :

$$\Delta G_{reaction[1]} = \Delta G_f(HfC) + 2 * \Delta G_f(SiC) - 3 * \Delta G_f(C) - \Delta G_f(Liq(HfSi_2))$$

D'où à 1827°C, l'enthalpie libre de la réaction [1] est :

$$\Delta G_{réaction[1]} = -485,3 kJ.mol^{-1}$$

On a ainsi le tableau ci-après.

**Enthalpies libres de différentes réactions à 1827°C entre $Liq(HfSi_2)$, HfSi, HfC, SiC, Si, Hf et C.**

| N° | Équation de la réaction considérée | $\Delta G_{réaction@2100K}$ $(kJ.mol^{-1})$ |
|---|---|---|
| [1] | $Liq(HfSi_2) + 3\ C_{(s)} \rightarrow HfC_{(s)} + 2\ SiC_{(s)}$ | -485,3 |
| [2] | $Liq(HfSi_2) + C_{(s)} \rightarrow HfC_{(s)} + 2\ Si_{(l)}$ | -400,0 |

(suite)

| N° | Équation de la réaction considérée | $\Delta G_{réaction@2100K}$ ($kJ.mol^{-1}$) |
|---|---|---|
| [3] | $Liq(HfSi_2) + 2\ C_{(s)} \rightarrow Hf_{(s)} + 2\ SiC_{(s)}$ | -294,5 |
| [4] | $Liq(HfSi_2) + C_{(s)} \rightarrow HfSi_{(s)} + SiC_{(s)}$ | -181,6 |
| [5] | $HfSi_{(s)} + 2\ C_{(s)} \rightarrow HfC_{(s)} + SiC_{(s)}$ | -303,7 |
| [6] | $HfSi_{(s)} + C_{(s)} \rightarrow HfC_{(s)} + Si_{(l)}$ | -261,1 |
| [7] | $2\ HfSi_{(s)} + C_{(s)} \rightarrow Liq(HfSi_2) + HfC_{(s)}$ | -122,2 |
| [8] | $HfSi_{(s)} + C_{(s)} \rightarrow Hf_{(s)} + SiC_{(s)}$ | -112,5 |
| [9] | $Hf_{(s)} + C_{(s)} \rightarrow HfC_{(s)}$ | -191,2 |
| [10] | $Hf_{(s)} + SiC_{(s)} \rightarrow HfC_{(s)} + Si_{(l)}$ | -148,6 |
| [11] | $Si_{(l)} + C_{(s)} \rightarrow SiC_{(s)}$ | -42,6 |
| [12] | $Si_{(l)} + HfC_{(s)} \rightarrow SiC_{(s)} + Hf_{(s)}$ | +148,6 |
| NB : Toutes les enthalpies ont été calculées à partir des données du tableau du présent paragraphe. Liq(HfSi₂) correspond au liquide de composition équivalente HfSi₂. | | |

Le carbure HfC étant un carbure très stable, il a une enthalpie libre très négative, ce qui implique que toutes les réactions chimiques, dont il est le produit, présentent des $\Delta G_{réaction}$ plus négatifs que les autres. Plus le $\Delta G_{réaction}$ d'une réaction chimique est négatif, plus le système tend à réaliser cette réaction chimique.

Ainsi selon l'étude thermodynamique, HfC doit se former à l'interface avec le C, en raison de sa réactivité. Les valeurs du tableau ci-dessus précisent, en effet, que les réactions les plus susceptibles de se produire, dans notre système, sont [1], [2], [3] et [5]. Il est intéressant de remarquer que la réaction [12] est impossible : le silicium ne peut pas consommer le carbure d'hafnium pour former son propre carbure, contrairement à la réaction [10] où l'hafnium peut consommer le carbure de silicium pour former HfC.

L'incertitude sur les températures de liquidus du système binaire Hf-Si (Voir exemples) ne permet pas de définir si à 1800°C, la solution est constituée de deux phases : une phase liquide et HfSi, ou de seulement d'une solution liquide de silicium et d'hafnium. Or la microstructure en multicouche est observée aussi bien lorsque la température d'infiltration est 1600°C, 1700°C que 1800°C. Ainsi, selon les résultats observés, une solution homogène de HfSi et d'un liquide comprenant 20 à 30% d'hafnium est considérée entre 1543°C et 1800°C. HfSi s'infiltre donc dans la préforme en suivant l'écoulement du liquide.

La thermodynamique définit l'état vers lequel tend le système, mais elle ne prend en compte ni les cinétiques de réaction, ni les énergies d'activation de chaque réaction. Or la barrière d'activation à franchir pour former une phase est proportionnelle à la stabilité de cette dernière : plus l'état final est stable, plus la barrière à franchir pour déclencher la réaction est importante, est grande. En conséquence, la barrière d'activation pour la formation de HfC est beaucoup plus importante que celle du SiC.

La Figure 53 présente l'évolution des barrières d'activation selon l'enthalpie d'une réaction : l'enthalpie de la réaction $A_2 + B_2 \rightarrow C_2 + D_2$ est plus négative que l'autre. On a donc $E_{A2} > E_{A1}$.

En conséquence, cette structure en multicouche peut s'expliquer par un mécanisme en plusieurs étapes :

i. Durant la montée en température et avant sa fusion à 1543°C, HfSi₂ peut normalement réagir avec le carbone selon les réactions [1] à [4]. En effet, on a : $\Delta G_{réaction[2]@\ 1800K}$ = -335$kJ.mol^{-1}$. Mais la barrière d'activation de ces réactions est trop importante et l'énergie du système insuffisante, la réaction n'a donc pas lieu. De plus, la vitesse de montée en température du four ne laisse pas le temps à HfSi₂ de réagir tant qu'il est solide.

ii. Au-delà de 1543°C, HfSi₂ se décompose de façon incongruente en deux phases qui s'infiltrent dans la préforme carbone : HfSi et une phase liquide comprenant environ 80% de silicium et 20% d'hafnium. HfSi est emporté dans le flux d'infiltration de la phase liquide.

iii. HfSi ne réagit pas afin de former HfC selon les réactions pour les mêmes raisons que HfSi₂ au point i. L'énergie du système est insuffisante pour franchir la barrière d'activation de ces réactions.

iv. HfSi et/ou le silicium contenu dans la phase liquide réagissent selon les réactions [8] et/ou [11], car l'énergie d'activation de ces réactions chimiques est beaucoup plus faible que celles des réactions précédentes. Le carbure de silicium SiC est alors formé au contact du carbone.

v. Les réactions [8] et [11] étant exothermiques (l'enthalpie de réaction est inférieure à 0), une augmentation locale de la température a lieu au fur et à mesure de la formation du SiC. Cette élévation de température peut favoriser la diffusion du carbone vers le liquide à travers le SiC, et également augmenter suffisamment l'énergie du système pour que la barrière d'activation des réactions formant HfC soit dépassée.

vi. La barrière d'activation étant franchie, les réactions [5], [6] et [10] peuvent avoir lieu. Le HfC est alors formé au-dessus de la couche de SiC qui est en contact avec le carbone. L'apport de carbone se fait par la diffusion de ce dernier à travers les carbures SiC.

La formation au-dessus du SiC d'une couche uniquement de HfC, et non pas mixte, est assez inexpliquée. Différentes raisons sont possibles : la réaction [5] ne dispose peut être pas de l'énergie suffisante pour dépasser sa barrière d'activation. Si la réaction [5] a lieu, il est possible que l'hafnium présent dans la phase liquide consomme le SiC formé selon la réaction [10]. L'étude de l'activité du carbone dans le système est à effectuer pour expliquer cette couche.

Ainsi, la microstructure en multicouche se forme grâce à la compétition entre les enthalpies libres de réaction et les barrières d'activation. La faible barrière d'activation de la formation du SiC permet de réaliser une fine couche de SiC au contact du carbone, mais la réaction étant exothermique, elle favorise la diffusion du carbone, augmente l'énergie du système et autorise les réactions de carburation de l'hafnium à se produire.

## REFERENCES

[BAND 2004] D. Bandyopadhyay, The Ti-Si-C System (Titanium-Silicon-Carbon), J. of Phase Equilibria and Diffusion, Vol. 25, No. 5, 2004.

[BITT 1997] H. Bitterman, P. Rogl, Critical Assessment and Thermodynamic Calculation of the Binary System Hafnium-Carbon (Hf-C), J of Phase Equilibria, Vol. 18, n°4, 1997.

[DEKE 2010] A. Dekeyrel, Mise au point d'un procédé d'élaboration rapide de composites Carbone/Carbone haute densité, Mémoire de thèse, 2010.

[EINS 1998] E. O. Einset, Analysis of Reactive Melt infiltration: I. Dérivation of the Governing Equation, Chemical Engineering Science, 1998.

[EVAN 1974] C. C. Evans, A. C. Parmee, R. W. Rainbow, Silicon treatment of Carbon Fiber-Carbon Composites, Proceedings of 4th London Conference on Carbon and Graphite, 1974, p. 231-235.

[FAVR 2003] A. Favre, H. Fuzelier, J. Suptil, An original way to investigate the siliconizing of carbon materials, Ceram Int (29), 2003, p. 235-243.

[FITZ 1998] E. Fitzer, L.M. Manocha, Carbon reinforcements and carbon/carbon Composites, 1998, p. 281-309.

[GOKH 1989] A.B. Gokhale, G.J. Abbaschian, The Hf-Si (Hafnium-Silicon) system, Bull of Alloy Phase Diagrams, Vol. 10, N°4, 1989.

[HILL 1975] W. B. Hillig, R. L. Mehan, C.R. Morelock, V. I. DeCarlo and W.Laskow, Silicon/Silicon Carbide Composites, Am Ceram Bull (54), N.12, 1975.

[KREN 2005] W. Krenkel, Carbon Fibre Reinforced Silicon Carbide Composites (C/SiC, C/C-SiC), Handbook of ceramic composites, 2005, p. 117-148.

[NELS 1999] E. S. Nelson, P. Collella, Parametric Study of Reactive Melt Infiltration, Application of Porous Media Methods for Engineered Materials, 1999, 18770.

[QUET 2007] A. Quet, Composites de friction à matrice céramique, Mémoire de thèse, 2007.

[RUDY 1969] E. Rudy, C-Hf-Si Phase Diagram, Ternary Phase Equilibria Journal, 1969, n° 150168.

[VOIG 2011] R. Voigt, W. Krenkel, G. Motz, Development of ultra-high temperature stable ceramics by reactive infiltration processes, Processing and Properties of Advanced Ceramics and Composites III, p. 123-129.

[WANG 2012] Y. Wang, X. Zhu, L. Zhang, L. Cheng, C/C-SiC-ZrC composites fabricated by reactive melt infiltration with Si0.87Zr0.13 alloy, Ceramics International, 2012.

[WILL 2007] B. Williams, R. Benander, *Method of making carbon fiber-carbon matrix reinforced ceramic composites,* US -B2-7 297 368, 2007.

[YE 2012] Y. Ye, H. Zhang, P. Zhang, Investigation of anti-ablation property of Cf/HfC composite prepared at 1900°C by reactive melt infiltration, 15th European Conference on Composite Materials, 2012.

[ZHAN 2011] S. Zhang, S. Wang, W. Li, Y. Zhu, Z. Chen, Preparation of ZrB2 based composites by reactive melt infiltration at relative low temperature, Materials Letters, n°65, 2011, p. 2910-2912.

[ZHAO 2000] J-C. Zhao, B. P. Bewlay, M.R. Jackson Q. Chen, Hf-Si Binary Phase Diagram Détermination and Thermodynamic Modeling, J. Phase Equilibria,Vol. 2, N°1, 2000.

[ZOU 2010] L. Zou, N. Wali, J-M. Yang, N. P. Bansal, Microstructural development of a Cf/ZrC composite manufactured by reactive melt infiltration, J. Eur Ceram Soc 30, 2010, p. 1527-1535.

**Revendications**

1.  Procédé de préparation d'un revêtement multicouche de carbures de métaux sur au moins une surface d'une première couche en carbone d'un substrat, et éventuellement sous ladite surface à l'intérieur de ladite première couche en carbone, par une technique d'infiltration réactive à l'état fondu, dans lequel on réalise les étapes a) à d) successives suivantes :

    a) on met en contact la surface avec un disiliciure de métal $MSi_2$ solide dans lequel M est choisi parmi l'Hafnium, le Titane, et le Tantale ;
    b) on chauffe le substrat, et le disiliciure de métal jusqu'à une température $T_P$ supérieure à la température de fusion du disiliciure de métal ;
    c) on observe un palier à la température $T_P$ pendant une durée suffisante pour que le disiliciure de métal réagisse avec le carbone et forme un premier revêtement multicouche comprenant une couche dense et continue constituée par du SiC, intégralement recouverte par une couche dense et continue constituée de MC ;
    d) on refroidit la pièce pourvue du premier revêtement multicouche ;

    puis, à l'issue de l'étape d), on réalise en outre éventuellement l'étape e) suivante :

    e) on dépose à la surface du premier revêtement multicouche une deuxième couche de carbone ;

    à l'issue de l'étape d) ou de l'étape e), on réalise en outre des étapes f) à i) successives suivantes :

    f) on met en contact la surface du premier revêtement multicouche contenant encore du carbone, ou la surface de la deuxième couche de carbone avec un disiliciure de métal $MSi_2$ solide dans lequel M est choisi parmi l'Hafnium, le Titane, et le Tantale ;
    g) on chauffe la surface du premier revêtement multicouche contenant encore du carbone et le disiliciure de métal, ou la deuxième couche de carbone et le disiliciure de métal, jusqu'à une température $T_P$ supérieure à la température de fusion du disiliciure de métal ;
    h) on observe un palier à la température $T_P$ pendant une durée suffisante pour que le disiliciure de métal réagisse avec le carbone et forme un deuxième revêtement multicouche comprenant une couche dense et continue constituée par du SiC, intégralement recouverte par une couche dense et continue constituée de MC ;
    i) on refroidit la pièce pourvue du deuxième revêtement multicouche ;

    puis, à l'issue de l'étape i), on réalise en outre éventuellement l'étape j) suivante :

    j) on dépose à la surface du deuxième revêtement multicouche une troisième couche de carbone ;

    et à l'issue de l'étape i) ou de l'étape j), on réalise en outre éventuellement l'étape k) suivante :

    k) on effectue une siliciuration de la surface du deuxième revêtement multicouche contenant encore du carbone ou de la troisième couche de carbone, par du Si liquide, moyennant quoi on obtient une couche de SiC sur le deuxième revêtement multicouche.

2.  Procédé selon la revendication 1, dans lequel la première couche en carbone est une couche en carbone déposée sur un substrat qui est en un matériau différent du carbone.

3.  Procédé selon la revendication 2, dans lequel le matériau différent du carbone est choisi parmi les céramiques carbures telles que le SiC; les matériaux composites des céramiques carbures tels que les composites SiC/SiC; les céramiques nitrures ; les céramiques borures ; les céramiques oxydes ; les métaux ; et leurs mélanges.

4.  Procédé selon la revendication 1, dans lequel la première couche en carbone est une couche d'un substrat entièrement en carbone.

**5.** Procédé selon la revendication 4, dans lequel le carbone qui constitue le substrat entièrement en carbone est du graphite.

**6.** Procédé selon la revendication 4 ou 5, dans lequel le carbone qui constitue le substrat entièrement en carbone est sous la forme de fibres de carbone, de fils de carbone ou bien sous la forme d'un matériau composite carbone/carbone tel qu'un matériau composite 2D ou 3D.

**7.** Procédé selon l'une quelconque des revendications 4 à 6, dans lequel le substrat en carbone présente une porosité ouverte moyenne de 1% à 99% en volume, déterminée par mesure de la Poussée d'Archimède.

**8.** Procédé selon l'une quelconque des revendications précédentes, dans lequel la mise en contact de la surface avec le disiliciure de métal $MSi_2$ solide est réalisée en déposant le disiliciure de métal $MSi_2$ sur la surface, ou bien en déposant un substrat en carbone et du $MSi_2$ dans un creuset.

**9.** Procédé selon la revendication 8, dans lequel le disiliciure de métal $MSi_2$ est déposé sur la surface sous la forme d'une poudre, compactée ou non, ou sous la forme d'une barbotine constituée d'une poudre du disiliciure de métal $MSi_2$ et d'un liquide.

**10.** Procédé selon l'une quelconque des revendications précédentes, dans lequel la température $T_P$ est de 900°C à 2500°C, par exemple de 1800°C.

**11.** Procédé selon l'une quelconque des revendications précédentes, dans lequel lors de l'étape b) on effectue une montée en température à raison de 1000°C à 3000°C/minute, par exemple à raison de 2800°C/minute jusqu'à la température $T_P$.

**12.** Procédé selon l'une quelconque des revendications précédentes, dans lequel on observe le palier à la température $T_P$ pendant une durée de 5 minutes à 15 minutes.

**13.** Procédé selon la revendication 7, dans lequel on met en contact la surface avec un volume du disiliciure de métal $MSi_2$ solide, inférieur à 30% du volume de la porosité ouverte moyenne du substrat en carbone, de préférence compris entre 20% et 30% du volume de la porosité ouverte moyenne du substrat en carbone.

**14.** Procédé selon l'une quelconque des revendications 1 à 13, dans lequel on répète l'étape e) éventuelle, puis on répète les étapes f) à i) ; puis on réalise l'étape j) éventuelle et l'étape k) éventuelle.

**Patentansprüche**

**1.** Verfahren zur Herstellung einer mehrschichtigen Metallencarbidenbeschichtung auf wenigstens einer Oberfläche einer ersten Kohlenstoffschicht eines Substrats, und eventuell unter der genannten Oberfläche im Innern der genannten ersten Kohlenstoffschicht, mit einem RMI-Reaktiven Schmelzinfiltrationsverfahren, bei der man die folgenden sukzessiven Schritte ausführt

a) man bringt die Oberfläche in Kontakt mit einem festen Metalldisilicid $MSi_2$, bei dem M ausgewählt wird unter Hafnium, Titan und Tantal ;
b) man erwärmt das Substrat und das Metalldisilicid bis auf eine Temperatur $T_P$, die höher ist als die Schmelztemperatur des Metalldisilicids ;
c) man verweilt solange auf einer Stufe mit der Temperatur $T_P$, bis das Metalldisilicid mit dem Kohlenstoff reagiert und eine erste mehrschichtige Beschichtung ausbildet, die eine dichte und durchgehende Schicht aus SiC, vollständig überzogen mit einer dichten und durchgehenden Schicht aus MC, umfasst;
d) man kühlt das mit der ersten mehrschichtigen Beschichtung versehene Teil ab ; dann, am Ende des Schritts d), führt man außerdem eventuell den folgenden Schritt e) aus :
e) man scheidet auf der Oberfläche der ersten mehrschichtigen Beschichtung eine zweite Kohlenstoffschicht ab ;

am Ende des Schritts d) oder des Schritts e) realisiert man außerdem die folgenden sukzessiven Schritte f) bis i) :

f) man bringt die Oberfläche der noch Kohlenstoff enthaltenden ersten mehrschichtigen Beschichtung oder die Oberfläche der zweiten Kohlenstoffschicht in Kontakt mit einem festen Metalldisilicid $MSi_2$, bei dem M ausgewählt wird unter Hafnium, Titan und Tantal ;

g) man erwärmt die Oberfläche der noch Kohlenstoff enthaltenden ersten mehrschichtigen Beschichtung und das Metalldisilicid, oder die zweite Kohlenstoffschicht und das Metalldisilicid, bis auf eine Temperatur $T_P$, die höher ist als die Schmelztemperatur des Metalldisilicids ;

h) man verweilt solange auf einer Stufe mit der Temperatur $T_P$, bis das Metalldisilicid mit dem Kohlenstoff reagiert und eine zweite mehrschichtige Beschichtung ausbildet, die eine dichte und durchgehende Schicht aus SiC, vollständig überzogen mit einer dichten und durchgehenden Schicht aus MC, umfasst;

i) man kühlt das mit der zweiten mehrschichtigen Beschichtung versehene Teil ab ; dann, am Ende des Schritts i), realisiert man außerdem eventuell den nachfolgenden Schritt j) :

j) man scheidet auf der Oberfläche der zweiten mehrschichtigen Beschichtung eine dritte Kohlenstoffschicht ab ;

und am Ende des Schritts i) oder des Schritts j) realisiert man außerdem eventuell den folgenden Schritte k) :

k) man unterzieht die Oberfläche der zweiten noch Kohlenstoff enthaltenden mehrschichtigen Beschichtung oder der dritten Kohlenstoffschicht einer Silizierung durch flüssiges Si, womit man auf der zweiten mehrschichtigen Beschichtung eine SiC-Schicht erhält.

2. Verfahren nach Anspruch 1, bei dem die erste Kohlenstoffschicht eine auf einem Substrat abgeschiedene Kohlenstoffschicht ist, das aus einem sich von Kohlenstoff unterscheidenden Material ist.

3. Verfahren nach Anspruch 2, bei dem das sich von Kohlenstoff unterscheidende Material ausgewählt wird unter den Carbidkeramiken wie SiC ; den Kompositmaterialien der Carbidkeramiken wie die SiC/SiC-Komposite ; den Nitridkeramiken ; den Boridkeramiken ; den Oxidkeramiken ; den Metallen ; und ihren Mischungen.

4. Verfahren nach Anspruch 1, bei dem die erste Kohlenstoffschicht eine Schicht eines ganz aus Kohlenstoff bestehenden Substrats ist.

5. Verfahren nach Anspruch 4, bei dem der Kohlenstoff des ganz aus Kohlenstoff bestehenden Substrats Graphit ist.

6. Verfahren nach Anspruch 4 oder 5, bei dem der Kohlenstoff des ganz aus Kohlenstoff bestehenden Substrats durch Kohlenstofffasern, Kohlenstoffdrähten oder auch durch ein Kohlenstoff/Kohlenstoff-Kompositmaterial wie etwa ein 2D- oder 3D-Kompositmaterial gebildet wird.

7. Verfahren nach einem der Ansprüche 4 bis 6, bei dem das Kohlenstoffsubstrat eine mittlere offene Porosität von 1 bis 99 Vol% hat, bestimmt durch Messung des Archimedes statischen Auftriebs.

8. Verfahren nach einem der vorhergehenden Ansprüche, bei dem der Kontakt der Oberfläche mit dem festen Metalldisilicid $MSi_2$ hergestellt wird, indem das Metalldisilicid $MSi_2$ auf die Oberfläche abgeschieden wird, oder auch, indem man ein Kohlenstoffsubstrat und $MSi_2$ in einen Tiegel gibt.

9. Verfahren nach Anspruch 8, bei dem das Metalldisilicid $MSi_2$ auf die Oberfläche abgeschieden wird in Form eines verdichteten oder unverdichteten Pulvers oder in Form eines Schlickers bzw. einer Suspension, gebildet durch ein Metalldisilicid $MSi_2$-Pulver und eine Flüssigkeit.

10. Verfahren nach einem der vorhergehenden Ansprüche, bei dem die Temperatur $T_P$ 900 °C bis 2500 °C beträgt, zum Beispiel 1800 °C.

11. Verfahren nach einem der vorhergehenden Ansprüche, bei dem man in Schritt b) einen Temperaturanstieg mit 1000 bis 3000°C/min durchführt, zum Beispiel mit 2800°C/min bis zu der Temperatur $T_P$.

12. Verfahren nach einem der vorhergehenden Ansprüche, bei dem man die Stufe mit der Temperatur $T_P$ für eine Dauer von 5 Minuten bis 15 Minuten einhält.

13. Verfahren nach Anspruch 7, bei dem man die Oberfläche in Kontakt bringt mit einem Volumen des festen Metalldisilicids $MSi_2$, kleiner als 30% des Volumens der mittleren offenen Porosität des Kohlenstoffsubstrats, vorzugsweise enthalten zwischen 20 % und 30 % des Volumens der mittleren offenen Porosität des Kohlenstoffsubstrats.

**14.** Verfahren nach einem der Ansprüche 1 bis 13, bei dem man den eventuellen Schritt e) wiederholt, dann die Schritte f) bis i) wiederholt; dann den eventuellen Schritt j) und den eventuellen Schritt k) ausführt.

**Claims**

**1.** A method for preparing a metals carbides multilayer coating on at least one surface of a first carbon layer of a substrate, and optionally under said surface inside said first carbon layer, by a reactive melt infiltration technique, wherein the following successive steps a) to d) are carried out:

a) the surface is put into contact with a solid metal disilicide $MSi_2$ wherein M is selected among hafnium, titanium and tantalum;
b) the substrate and the metal disilicide are heated up to a temperature $T_P$ above the melting temperature of the metal disilicide;
c) a plateau at the temperature $T_P$ is observed for a sufficient duration so that the metal disilicide reacts with the carbon and forms a first multilayer coating comprising a dense and continuous layer consisting of SiC, fully covered by a dense and continuous layer consisting of MC;
d) the part provided with the first multilayer coating is cooled;

and then, at the end of step d), optionally the following step e) is further carried out:

e) a second carbon layer is deposited at the surface of the first multilayer coating;

at the end of step d) or of step e), the following successive steps f) to i) are further carried out:

f) the surface of the first multilayer coating still containing carbon or the surface of the second carbon layer is put into contact with a solid metaldisilicide $MSi_2$ wherein M is selected among hafnium, titanium, and tantalum;
g) the surface of the first multilayer coating still containing carbon and the metal disilicide, or the second carbon layer and the metal disilicide are heated up to a temperature $T_P$ above the melting temperature of the metal disilicide;
h) a plateau at the temperature $T_P$ is observed for a sufficient duration so that the metal disilicide reacts with the carbon and forms a second multilayer coating comprising a dense and continuous layer consisting of SiC, fully covered by a dense and continuous layer consisting of MC;
i) the part provided with the second multilayer coating is cooled;

and then, at the end of step i), optionally the following step j) is further carried out:

j) a third carbon layer is deposited at the surface of the second multilayer coating;

and at the end of step i) or of step j), optionally the following step k) is further carried out:

k) silicidation of the surface of the second multilayer coating still containing carbon or of the third carbon layer is carried out, with liquid Si, whereby a SiC layer is obtained on the second multilayer coating.

**2.** The method according to claim 1, wherein the first carbon layer is a carbon layer deposited on a substrate which is made of a material different from carbon.

**3.** The method according to claim 2, wherein the material different from carbon is selected from carbide ceramics such as SiC; composite materials of carbide ceramics such as SiC/SiC composites; nitride ceramics; boride ceramics; oxide ceramics; metals; and mixtures thereof.

**4.** The method according to claim 1, wherein the first carbon layer is a layer of a substrate fully made of carbon.

**5.** The method according to claim 4, wherein the carbon which constitutes the substrate fully made of carbon is graphite.

**6.** The method according to claim 4 or 5, wherein the carbon which constitutes the substrate fully made of carbon is in the form of carbon fibers, carbon wires, or else in the form of a carbon/carbon composite material such as a 2D or 3D composite material.

7. The method according to any one of claims 4 to 6, wherein the carbon substrate has an average open porosity from 1% to 99% by volume, determined by measuring the Archimedes' buoyancy force.

8. The method according to any one of the preceding claims, wherein the contacting of the surface with the solid metal disilicide $MSi_2$ is achieved by depositing the metal disilicide $MSi_2$ on the surface, or else by depositing a carbon substrate and $MSi_2$ in a crucible.

9. The method according to claim 8, wherein the metal disilicide $MSi_2$ is deposited on the surface in the form of a powder, either compacted or not, or in the form of a slurry consisting of a powder of the metal disilicide $MSi_2$ and of a liquid.

10. The method according to any one of the preceding claims, wherein the temperature $T_P$ is from 900°C to 2,500°C, for example 1,800°C.

11. The method according to any one of the preceding claims, wherein, during step b) a rise in temperature is carried out, at a rate of 1,000°C to 3,000°C/minute, for example at a rate of 2,800°C/minute up to the temperature $T_P$.

12. The method according to any one of the preceding claims, wherein the plateau at temperature $T_P$ is observed for a duration from 5 minutes to 15 minutes.

13. The method according to claim 7, wherein the surface is put into contact with a volume of the solid metal disilicide $MSi_2$, of less than 30% of the volume of the average open porosity of the carbon substrate, preferably comprised between 20% and 30% of the volume of the average open porosity of the carbon substrate.

14. The method according to any one of claims 1 to 13, wherein the optional step e) is repeated, and then steps f) to i) are repeated; and then the optional step j) and the optional step k) are carried out.

FIG. 1

FIG. 2

FIG. 3

↑ Direction des fibres dans le plan

FIG. 4

● Fibres perpendiculaires au plan

FIG. 5

FIG. 6

EP 2 964 590 B1

FIG. 7

Silicium % en masse

A

FIG. 8

B

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

Surface de la pastille

Métal résiduel
HfC
SiC
Carbone

FIG. 22

FIG. 23

EP 2 964 590 B1

FIG. 24

FIG. 25

FIG. 26

FIG. 27

FIG. 28

FIG. 29

FIG. 30

FIG. 31

FIG. 32

FIG. 33

FIG. 34

FIG. 35

FIG. 36

FIG. 37

FIG. 38

FIG. 39

FIG. 40

FIG. 41

FIG. 42

FIG. 43

FIG. 44

FIG. 45

FIG. 46

FIG. 47

FIG. 48

FIG. 49

FIG. 50

FIG. 51

FIG. 52

FIG. 53

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7297368 B2


**Littérature non-brevet citée dans la description**

- **D. BANDYOPADHYAY.** The Ti-Si-C System (Titanium-Silicon-Carbon). *J. of Phase Equilibria and Diffusion,* 2004, vol. 25 (5
- **H. BITTERMAN ; P. ROGL.** Critical Assessment and Thermodynamic Calculation of the Binary System Hafnium-Carbon (Hf-C). *J of Phase Equilibria,* 1997, vol. 18 (4
- **A. DEKEYREL.** Mise au point d'un procédé d'élaboration rapide de composites Carbone/Carbone haute densité. *Mémoire de thèse,* 2010
- **E. O. EINSET.** Analysis of Reactive Melt infiltration: I. Dérivation of the Governing Equation. *Chemical Engineering Science,* 1998
- **C. C. EVANS ; A. C. PARMEE ; R. W. RAINBOW.** Silicon treatment of Carbon Fiber-Carbon Composites. *Proceedings of 4th London Conference on Carbon and Graphite,* 1974, 231-235
- **A. FAVRE ; H. FUZELIER ; J. SUPTIL.** An original way to investigate the siliconizing of carbon materials. *Ceram Int,* 2003, vol. 29, 235-243
- **E. FITZER ; L.M. MANOCHA.** *Carbon reinforcements and carbon/carbon Composites,* 1998, 281-309
- **A.B. GOKHALE ; G.J. ABBASCHIAN.** The Hf-Si (Hafnium-Silicon) system. *Bull of Alloy Phase Diagrams,* 1989, vol. 10 (4
- **W. B. HILLIG ; R. L. MEHAN ; C.R. MORELOCK ; V. I. DECARLO ; W.LASKOW.** Silicon/Silicon Carbide Composites. *Am Ceram Bull,* 1975, vol. 54 (12
- Carbon Fibre Reinforced Silicon Carbide Composites (C/SiC, C/C-SiC). **W. KRENKEL.** Handbook of ceramic composites. 2005, 117-148

- **E. S. NELSON ; P. COLLELLA.** Parametric Study of Reactive Melt Infiltration. *Application of Porous Media Methods for Engineered Materials,* 1999, 18770
- **A. QUET.** Composites de friction à matrice céramique. *Mémoire de thèse,* 2007
- **E. RUDY.** C-Hf-Si Phase Diagram. *Ternary Phase Equilibria Journal,* 1969
- **R. VOIGT ; W. KRENKEL ; G. MOTZ.** Development of ultra-high temperature stable ceramics by reactive infiltration processes. *Processing and Properties of Advanced Ceramics and Composites,* 2011, vol. III, 123-129
- **Y. WANG ; X. ZHU ; L. ZHANG ; L. CHENG.** C/C-SiC-ZrC composites fabricated by reactive melt infiltration with Si0.87Zr0.13 alloy. *Ceramics International,* 2012
- **Y. YE ; H. ZHANG ; P. ZHANG.** Investigation of anti-ablation property of Cf/HfC composite prepared at 1900°C by reactive melt infiltration. *15th European Conference on Composite Materials,* 2012
- **S. ZHANG ; S. WANG ; W. LI ; Y. ZHU ; Z. CHEN.** Preparation of ZrB2 based composites by reactive melt infiltration at relative low temperature. *Materials Letters,* 2011, 2910-2912
- **J-C. ZHAO ; B. P. BEWLAY ; M.R. JACKSON ; Q. CHEN.** Hf-Si Binary Phase Diagram Détermination and Thermodynamic Modeling. *J. Phase Equilibria,* 2000, vol. 2 (1
- **L. ZOU ; N. WALI ; J-M. YANG ; N. P. BANSAL.** Microstructural development of a Cf/ZrC composite manufactured by reactive melt infiltration. *J. Eur Ceram Soc,* 2010, vol. 30, 1527-1535